Europäisches Patentamt

(19) European Patent Office

Office européen des brevets

(11) EP 0 625 172 B1

(12) EUROPEAN PATENT SPECIFICATION

(45) Date of publication and mention
of the grant of the patent:
**08.09.1999 Bulletin 1999/36**

(51) Int Cl.$^6$: **C08L 67/02**, B29C 45/00,
B29C 49/00, B29C 51/00,
B65D 65/38

(21) Application number: **93904680.1**

(22) Date of filing: **03.02.1993**

(86) International application number:
**PCT/US93/00740**

(87) International publication number:
**WO 93/15146 (05.08.1993 Gazette 1993/19)**

(54) ELEVATED TEMPERATURE DIMENSIONALLY STABLE IMPACT MODIFIED POLYESTER WITH LOW GAS PERMEABILITY

WÄRMEFORMBESTÄNDIGE, SCHLAGZÄH MODIFIZIERTE POLYESTER MIT NIEDRIGER GASDURCHLÄSSIGKEIT

POLYESTER RESISTANT AUX IMPACTS, DE DIMENSION STABLE A TEMPERATURE ELEVEE AVEC FAIBLE PERMEABILITE AU GAZ

(84) Designated Contracting States:
**AT BE CH DE DK ES FR GB GR IE IT LI LU MC NL PT SE**

(30) Priority: **03.02.1992 US 829478**
**03.04.1992 US 863204**
**22.06.1992 US 903076**
**17.07.1992 US 914388**
**05.01.1993 US 997708**

(43) Date of publication of application:
**23.11.1994 Bulletin 1994/47**

(73) Proprietor: **Lawson Mardon Thermaplate Corporation**
**Piscataway, New Jersey 08854 (US)**

(72) Inventors:
* **DALGEWICZ, Edward, J., III**
**Annandale, Virginia 22003 (US)**
* **FREUNDLICH, Richard, A.**
**Plainsboro, NJ 08536 (US)**

* **BOND, John**
**Pittsburgh, PA 15217 (US)**

(74) Representative:
**Richebourg, Michel François et al**
**Cabinet Michel Richebourg,**
**"Le Clos du Golf",**
**69, rue Saint-Simon**
**42000 Saint Etienne (FR)**

(56) References cited:
**EP-A- 0 081 144        EP-A- 0 221 336**
**DE-A- 1 794 333        DE-A- 3 328 566**
**US-A- 4 713 268**

* **Journal of Applied Polymer Science, vol. 29, no. 3, 1984, John Wiley & Sons, Inc., W.E. PRESTON et al.: "Effect of crystallinity on gas permeation in miscible polycarbonate-copolyester blends", pages 845-852, see whole document**

**Description**

<u>Technical Field</u>

The invention relates to a process for producing a thermoplastic crystallizable impact modified polyester composition having improved gas barrier and dimensional stability characteristics.

<u>Background Art</u>

Polyesters have heretofore been widely used in the food package industry, including blister packs for meats, containers for frozen foods, ovenable and microwavable (« dual ovenable ») trays and carbonated beverage bottles. A major effort in such packaging applications has been directed toward reducing the gas permeability of the package, since a decrease in such permeability will lead to a longer shelf life of the food product, be it at frozen refrigerated or ambient temperature storage. Another focus of great effort in the food packaging industry is the dimensional stability of the package over long periods of time at ambient temperature or upon heating of the contents in either microwave or conventional ovens. Of particular concern in this regard are the breakage of seals and warping due to excessive shrinkage of the container during retort or any of the thermal sterilization processes. Still another effort of great focus is the impact strength of the package at low temperatures. Improved impact strength of the package allows for greater durability at low temperature applications which translates to greater versatility of the packaging product.

A number of prior patents have addressed the above-mentioned concerns, for the most part individually. As a result, for example, polyester compositions that are particularly suitable as carbonated beverage containers due to there low gas permeability, are generally unsuitable for applications and processes requiring elevated temperatures, as these materials generally exhibit excessive shrinkage and warping at these higher temperatures. Examples of such prior activity include :

U.S. Patent No. 4,560,741 discloses a polyester resin derived from a $C_{(2-8)}$ diol, oxydiacetic acid and naphthalene dicarboxylic acid having improved resistance to gas permeability as compared to polyethylene terephthalate homopolymers.

U.S. Patent No. 3,960,807 discloses a heat-set article comprising a polymeric crack-stopping agent and a nucleant as having a good dimensional stability and impact resistance.

U.S. Patent No. 4,463,121 discloses thermoformed articles of partially crystallized polyethylene terephthalate and a polyolefin, as having improved impact resistance and high temperature dimensional stability.

U.S. Patent No. 4,572,852 discloses a crystalline polyethylene terephthalate/polyolefin article as having high dimensional stability.

U.S. Patent No. 4,618,515 discloses a polyethylene terephthalate wide mouth bottle wherein the neck portion has higher thermal and strain crystallinity than the rest of the bottle, such that the neck is more resistant to shrinkage during a hot-fill process.

U.S. Patent No. 4,535,025 discloses a biaxially-oriented, heat-set polyethylene terephthalate material with a density of over 1.4050 g/cc at 25°C as having improved gas barrier properties.

U.S. Patent No. 4,282,277 discloses a biaxially-oriented thermoset polymer seamless conduit as having good low temperature tensile impact strength.

U.S. Patent No. 5,003,041 discloses blends of polyethylene terephthalate and trans-4,4'-stilbenedicarboxylic acid as having improved gas barrier properties as compared to polyethylene terephthalate homopolymer.

U.S. Patent No. 4,764,403 discloses a biaxially-oriented, heat-set, multi-layer article with an inner layer of polyethylene terephthalate, as having improved barrier properties and thermal stability.

U.S. Patent 4,874,647 discloses a composition of polyethylene terephthalate and bisphenol-A polycarbonate for use in a polyester laminate. The composition is disclosed as providing for improved mechanical strength.

U.S. Patent No. 4,061,706 discloses a continuous melt process for thermoforming thermoplastic polymers, preferably polyamides.

U.S. Patent No. 4,261,473 discloses a container made of thermoplastic resin, oriented in at least one direction, as having an oxygen permeability of lower than $5 \times 10^{-11}$ cc-cm/cm$^2$-sec-cm Hg.

U.S. Patent No. 4,469,270 discloses a shaped container of polyalkylene terephthalate with a crystallinity of at least 20 percent as determined by density measurement.

U.S. Patent No. 4,996,269 discloses a thermoplastic resin of polyethylene naphthalate and a polyester elastomer and having a crystallinity from 10 to 40 percent as measured by density, as having high dimensional stability.

U.S. Patent No. 4,022,748 discloses a polyester which is impact modified by a rubber elastic graft copolymer and is melt extruded at between 230-280°C with improved impact properties.

U.S. Patent No. 4,244,859 discloses a polyester which is impact modified by an acrylic rubber and is melt mixed with improved impact properties.

U.S. Patent No. 4,525,529 discloses a polyester which is impact modified by an ethylene copolymer and an acrylic rubber which is melt kneaded at 250°C with improved impact properties.

U.S. Patent No. 4,564,658 discloses a polyester which is impact modified by a linear low density polyethylene and is melt extruded at between 230-300°C with improved impact properties.

U.S. Patent No. 4,948,842 discloses a polyester which is impact modified by a copolymer of ethylene, propylane, and diene rubber which is melted extruded at 230°C with improved impact properties.

U.S. Patent No. 4,977,217 discloses a polyester which is impact modified by a copolymer of ethylene, propylene, polyene grafted with an epoxide functional ester and which is melt extruded at between 180-260°C as having improved impact properties.

U;S. Patent No. 5,086,118 discloses a polyester which is impact modified by a copolymer of ethylene and which is melt extruded as having improved impact properties.

U.S. Pat N° 4,713,268 discloses ovenable trays formed from poly (ethyleneterephtalate) modified with 4 - 29 % core / shell polymer, 0 - 14.5 % aromatic polycarbonate and 1 - 5 % aromatic polyester crystallization rate accelerator.

The conventional process for manufacturing polyester containers, herein referred to as a « glass-to-mold » process, has at least two heating steps ; the first during production of the polyester source material (e.g., by the supplier), and the second during shaping of the polyester into a container (e.g., by the manufacturer). In the first step of the conventional process, the source polyester material is cooled as it is formed into pellets, rolls, sheets or other shapes suitable for shipping, storage and subsequent processing into articles for manufacture. In many processes, such as that for producing amorphous polyethylene terephthalate (A-PET), the cooling of the material from the molten state is at a sufficiently rapid rate so as to thermally quench most of the dynamic crystallization of the polymer and thus produce an undercrystallized material. In addition, thermal gradients may arise in the polyester during heating and cooling. The material stresses due to these thermal gradients then become frozen in the ambient temperature material. Such stresses due to thermal gradients are referred to herein as thermally induced stresses.

In the second step of conventionally producing articles made of polyesters, the pellets, sheets, etc. of polyester made in the first step are reheated until the material reaches a recrystallization onset temperature. At this point recrystallization of the material begins. Increased crystallinity is desirable in a product as it increases the melting temperature of the polyester so as to allow it to be used in a conventional oven for reconstitution.

Recrystallization upon reheating of a crystallizable polyester may be due to the further growth of existing crystals in the material or to the formation of new crystals, or both. The recrystallization onset temperature of a polyester may be easily detected by heating differential scanning calorimetry as that temperature at which the exothermic recrystallization reaction begins. The recrystallization onset temperature of a polyester material as determined in this way is localized to a temperature between the glass transition temperature and the melting temperature of the material and is dependent upon polymer chain length and composition, and the heating rate.

In the conventional thermoforming process, the heated polyester is then maintained at or near the recrystallization onset temperature until the desired degree of crystallinity is achieved, after which the material is molded and rapidly cooled. During glass-to-mold thermoshaping, additional undesirable thermal stresses may also be introduced into the polyester article at this cooling step.

As a result of the glass-to-mold manufacturing process, upon reheating of a conventional polyester article to the recrystallization onset temperature of the material, the undercrystallized material then again begins recrystallization. Such a situation presents a serious drawback to articles made by conventional processes, particularly those used as containers for the storage of foodstuffs and products that are meant to remain in sterilized state or are meant to be reheated to at or above the recrystallization onset temperature. Because of the recrystallization of the container on subsequent reheat, the additional shrinkage may result in not only product deformation, by also seal breakage or complete product failure as a container or barrier. Thus, a substantial number of previously sterilized items within a polyester container made by conventional processes must be discarded, resulting in a substantial amount of waste.

It is also known that amorphous phase polymer chains may be axially or bi-axially oriented by applying force, in either one or two directions, respectively, to the polymeric material while it is in a semi-fluid state, usually above the glass transition temperature (Tg) of the polymer. To achieve such a polymer chain orientation, a mechanical force is continuously applied as the polymeric material is cooled to below its glass transition temperature (Tg). It is known that such orientation of the polymers in a material decreases the gas permeability of the material as compared to a non-oriented polyester. For polyethylene terephthalate, such orientation reduces the oxygen permeability at 0 % humidity from 10 cc-mil/100 in$^2$ (650 cm$^2$)-day-atm to 5 cc-mil/100 in$^2$ (650 cm$^2$)-day-atm. However, chain orientation by this method results in mechanical stresses becoming frozen in the ambient temperature material. Heating of the oriented material to near or above the Tg results in the release of the physically induced stress contained therein, with the result that the material undergoes substantial dimensional distortion. Such distortion may also occur over long periods of time at ambient temperature. Thus, although the gas barrier properties of oriented materials make them particularly suitable for uses such as carbonated beverage containers, these same materials are wholly unsuitable for use where temperatures near or above the Tg of the material will be encountered. In particular, such oriented materials are unsuitable for use in retort, hot-fill and high temperature sterilization processes.

The thermally and physically induced stresses in a polyester result in a molecular imprinting of the past thermal history of the material, generally referred to as « memory ». Such memory can only be completely removed from the material by reheating the polyester to above the melting temperature for a sufficient time to bring the material to a completely amorphous, molten state. Such high temperatures, however, are not used in the glass-to-mold thermoforming process. As a result, articles made in this way retain much of the stress introduced in their process of manufacture.

Thus, another drawback to articles made by the glass-to-mold process in that upon reheat some of the thermally and mechanically induced stresses frozen in the polyester are relieved, which may result in severe dimensional changes in the molded material. The greater degree of thermally and mechanically induced stresses imprinted in a article, the greater the potential for deformation therein upon reheating. As with the dimensional changes associated with recrystallization, distortions due to stress release can cause container seal failure and seam failure, with the resultant loss of sterility of the foodstuffs contained therein. Such stress release may additionally cause undesired warping during retort, hot-fill and high temperature sterilization processes. As meant within this disclosure, the sum of the dimensional changes upon heating a polyester due to recrystallization and stress releases are referred to as the thermal dimensional stability of the polyester. Such a characterization of the thermal dimensional stability of a polyester may be conveniently expressed as the percent change in either linear, planar or volume dimensions, as appropriate, for a polyester article, that results from elevating the temperature of the article from about -60°C to a temperature just below the onset of melting of the article. For example, for polyethylene terephthalate, this temperature range is from -60°C to about 200°C.

An additional drawback to article of glass-to-mold manufacture is that since these polyesters retain a memory and may be undercrystallized, the use of scrap material derived in the manufacture of these articles is made less than highly desirable for inclusion in heat-based reclamation processes, as the stress memory and sub-optimal crystallinity will become incorporated in the recycled material, thereby conferring an undesirable thermal instability on the recycled article.

A further undesirable consequence of the glass-to-mold process of manufacturing a polyester article is the additional energy that must be expended to reheat the polymer prior to the shaping process. Such additional heating is both time consuming and energy-inefficient.

It is known that polyesters can be impact modified by the addition of rubber copolymers having low glass transition temperatures, such as taught in U.S. Patent No. 4,022,748. Most impact modifiers are added to the polyester and dispersed to give the impact properties desired. Factors affecting the impact strength of the polyester include particle size and distribution of the impact modifier, degree of mixing, and degree of melting of the impact modifier. The solubility of the impact modifier in the polyester affects the size and distribution of precipitates of impact modifier from the melt. Traditionally, the modifier is partially melt mixed into the polyester, with most of the consideration being given to the dispersion of the particle size and distribution, and to the premixing of the initial impact modifier resins ; little or no thought is given to the control of melt precipitation in order to control the particle size and distribution of these impact modifier precipitates. Because of the generally rapid cooling of the impact modified polyesters in conventional processes, there is a low amount of uncontrolled precipitation of the dissolved impact modifiers from the melt. As a result, past inventors have been unable to achieve significant impact modification at the same costs as the improvements represented by the present invention.

In light of the above considerations, there clearly exists a need for an impact modified polyester that is dimensionally stable at both low and high temperature, that at the same time provides an improved gas barrier, and provides for improved impact strength at low temperatures. Preferably, such a product would be sterilizable by temperature, pressure, chemical and/or radiation methods. Still more preferably, such a polyester would be compatible with use for containing foodstuffs, beverages, and the like, and would be both microwavable and ovenable at high temperatures. It would additionally be advantageous for such a product to be recyclable, so as to both decrease the cost of manufacture and provide a product that is environmentally sound.

One object of the invention is to provide a process for producing a thermoplastic crystalline polyester, preferably polyethylene terephthalate, having improved impact strength. Another object of the invention is to provide a process for producing a thermoplastic polyester that has improved impact strength, as well as improved gas barrier properties and/or improved dimensional stability over a wide temperature range. Another object of the invention is to provide a process for producing a polyester article of manufacture having the above characteristics and which is also suitable for sterilization by heat, chemical, and/or radiation means and is safe for the packaging and storage of foods and beverages.

Disclosure of the Invention

The present invention provides for process for producing a polyester with improved impact properties, low oxygen permeability and low dimensional shrinkage during heating. Impact modifiers are dissolved into a molten polyester to form a eutectic alloy. The eutectic alloy of this composition freeezes on slow cooling to form a mixture of particles of the impact modifier embedded in a matrix of the polyester. This therefore is the formation of a natural composite. By controlling the solidification of the melt, the size and distribution of precipitates of impact modifier from the melt can be controlled, which allows control of the mechanical properties of the composition. If, however, the liquid composition is thermally quenched, little or no precipitation will occur leaving a material without the composite characteristics of the composition produced by the process of the present invention. The precipitation can also be controlled either by homogenous nucleation or by heterogeneous nucleation with the addition of a nucleating agent or the introduction of a suitable surface for nucleation.

The moldable thermoplastic impact modified polyester produced by the process of the invention has intrinsic viscosity form 0.65 dl/g to 1.3 dl/g that provides a gas barrier characterized by an oxygen permeability of from 0.2 to 4.9 cc-mil/100 in$^2$ (650 cm$^2$)-24 hrs-atm at 23°C and at 60 % relative humidity outside/100 % relative humidity inside, while also having an enthalpy of recrystallization upon heating of from 0 to -4.0 calories per gram as determined by heating differential scanning calorimetry, as well as a linear dimensional shrinkage of from 0 % to 6 % upon heating from -60°C to 200°C.

The invention also provides for a process for producing a impact modified polyalkylene terephthalate, such as polyethylene terephthalate. This composition comprises :

(A) from about 70 to about 99 % by weight of a polyalkylene terephthalate which functions as the base polymer ;
(B) from about 1 to about 30 % by weight of an impact modifier comprising $C_{(1-6)}$alkylene-$C_{(1-6)}$acrylate copolymers, such as ethylene-methacrylate, ethylene-butylacrylate, ethylene-ethylacrylate, and/or ethylene-vinyl acetate, ethylene-maleic acid, polypropylene, isopropylene, polybutadiene, and paramethylstyrene which functions to increase the cold impact strength of the polyethylene ; and
(C) from about 0 to about 29 % by wieght of a compatibilizer which functions to improve the surface properties between the polyalkylene terephthalate and the impact modifier, and which provides an impact modified polyester that has an oxygen permeability of from 0.2 to 4.9 cc-mil/100 in$^2$ (650 cm$^2$)-24 hr-atm at 23°C and 60 % relative humidity outside/100 % relative humidity inside without axial orientation.

The invention provides further for a process for producing a shaped article of manufacture comprising the above impact modified polyester composition.

The invention provides further for a process for producing a shaped impact modified polyester article with improved low temperature impact strength comprising the steps :

(a) heating a composition comprising a crystallizable polyester and an impact modifier to a temperature above the melting point of the polyester for a time sufficient to bring said polyester to a substantially amorphous (greater than 99 weight %) molten state ;
(b) maintaining the composition heated in step (a) above said melting temperature until said impact modifier is dissolved in the polyester.
(c) controlling cooling of the composition in step (b) at a rate of from 1°C to 80°C per minute so as to avoid thermal quenching until there is crystallization of the polyester and impact modifier forming a mixture of particles of impact modifier embedded in a matrix of the polyester, the impact modifier having a particle size of from 0.1 to 10 microns in diameter ; and
(d) continuing controlled cooling of the composition by contacting the composition to a surface capable of imparting shape for from 1 second to 5 minutes, said contact surface being at a temperature of at least the lower boundary crystallization temperature from melt of said polyester to provide an impact modified polyester, wherein said impact modified polyester has an oxygen permeability of from 0.2 to 4.9 cc-0.025 mm/650 cm$^2$-24 hrs-atm at 23°C and 60 % relative humidity outside/100 % relative humidity inside and a heat of recrystallization of from 0 to -4.0 calories per gram as measured by differential scanning calorimetry at a heating rate of 25°C/minute.

Brief Description of the Drawings

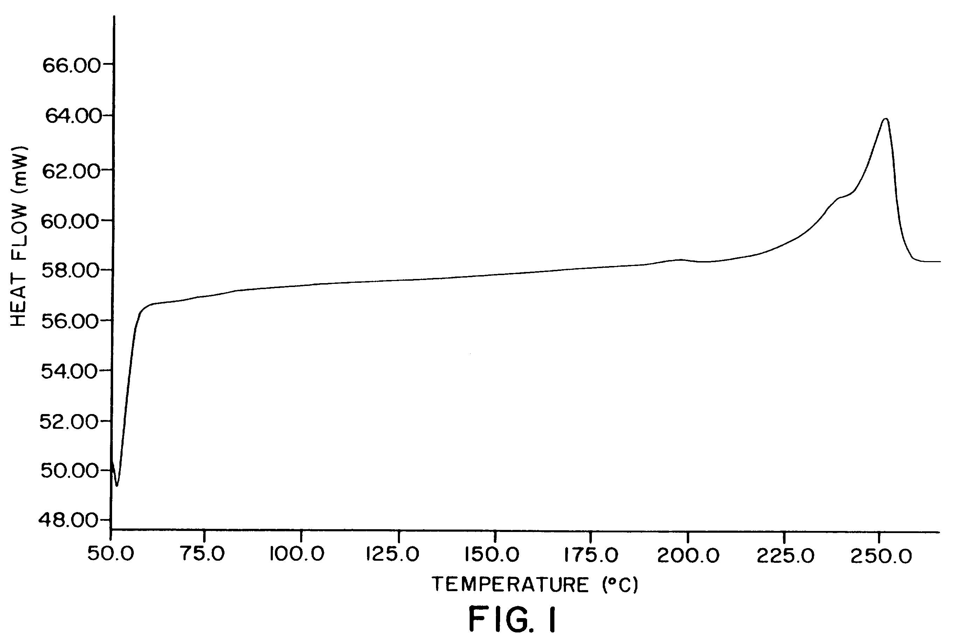

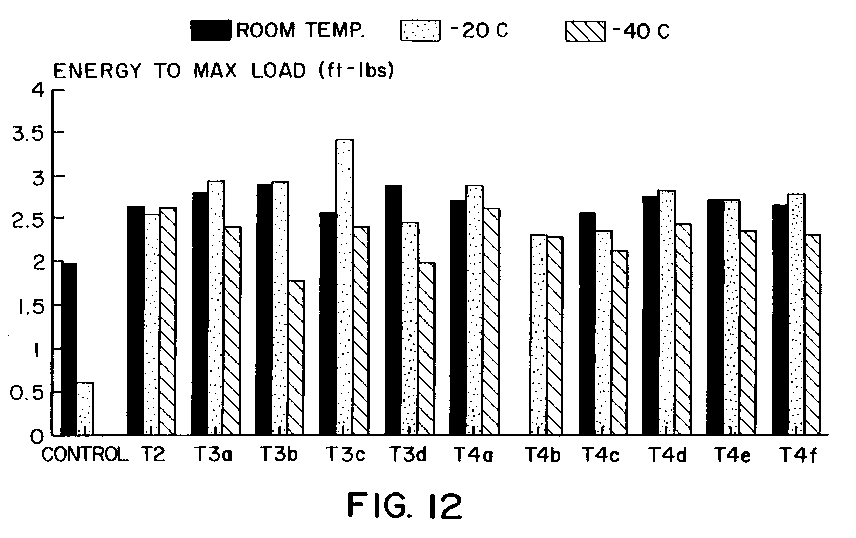

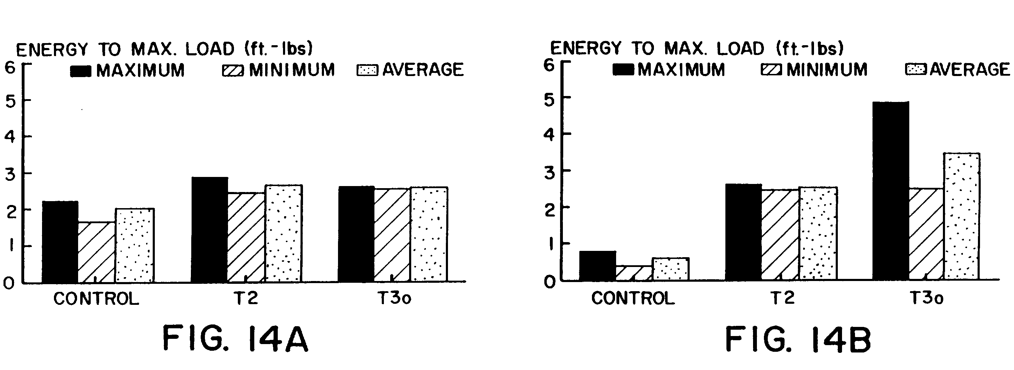

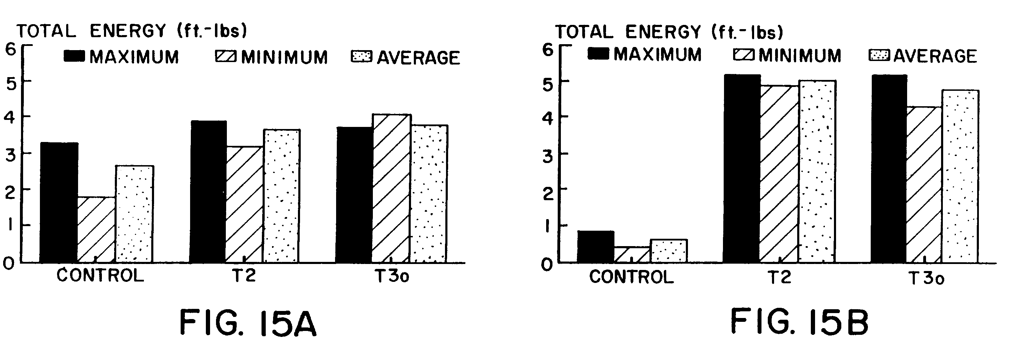

Figures 1 through 11 depict differential scanning calorimetry thermograms of a polyester compositions made from the present melt-to-mold process and the prior glass-to-mold process as described in the Examples. Figures 12 to 15 graphically depict the impact properties of the composition produced by the process of the invention at ambient temperature, as well as at -20°C and -40°C.

Mode(s) for Carrying Out the Invention

Crystallizable polyesters as meant herein are those polyester homopolymers, heteropolymers and blends in which at least 10 % of the final material is capable of existing in a crystalline state at ambient temperature. Examples of such crystallizable polyester homopolymers include the alkylene terephthalate and naphthalate homopolymers such as, for example, polyethylene terephthalate (PET), polypropylene terephthalate, polybutylene terephthalate (PBT), polymethylpentene terephthalate, polycyclohexenedimetylyene terephthalate, polyethylene naphthalate (PEN), polypropylene naphthalate, polybutylene naphthalate, as well as polyterephthalic acid (PTA), polycycloterephthatlic acid (PCTA), and cyclohexanedimethanol (CHDM). Modified polyesters, particularly glycol modified polyesters of, for example, PET, PBT, PEN and PCTA are also known to be crystallizable. Furthermore, certain copolymers of the above compounds are also crystallizable polyesters, as are blends of these homopolymers, blends of copolymers and blends of heteropolymers.

The product produced by the process of the invention is thought to achieve its desirable impact properties through controlled precipitation of the impact modifiers. This can be accomplished by the combination of several factors including the use of controlled cooling, nucleating agents, and the proper selection of impact modifiers for a given polyester. The product produced by the process of the invention is further characterized by the homogeneity of the resin, low gas permeation, dimensional stability and greater control of impact modifier precipitation at elevated temperatures due to a novel process of manufacture, herein referred to as a « melt-to-mold process.

Without being limited by theory, it is believed that these superior properties of homogeneity, low gas permeation and dimensional stability are related to both the fact that the polyester starting material is in a completely or substantially completely amorphous molten state, thereby having little, if any, memory at the outset. By « substantially completely amorphous » it is meant that the amount of polyester that is not melted to a completely amorphous molten state is not great enough to yield a material that exceeds the gas permeability, dimensional stability and enthalpy of recrystallization (as determined by heating DSC) that characterize the material produced by the process of the invention. Thus, it is envisioned that small amounts (e.g., less than 1 weight percent) of non-molten material will not substantially affect the permeability and recrystallization characteristics of the impact modified polyester or article of manufacture produced by the process of the invention.

In addition to starting with a base polyester in an amorphous, molten state, the process of the invention makes use of a controlled cooling step. The controlled cooling of the molten material in making the product of the invention provides for at least three advantages. First, the product produced by the process of the invention contains highly developed crystals at, or close, to a level of crystallinity that the material naturally seeks under the most favorable conditions for crystal formation. By highly developed crystals, it is meant that the crystals in the material are larger in size, more spherical in shape and are more evenly distributed throughout the material than was heretofore attainable in conventional manufacturing processes. It is thought that these highly developed crystals serve to impede gas flow through the material. Such a high degree of crystal growth also eliminates the need for axial orientation of the polymer for this gas barrier purpose. As a result, the product produced by the process of the invention does not have mechanical stresses embedded therein that are traditionally associated with polyester of low gas permeability.

A second advantage of the invention is that the controlled cooling in the melt-to-mold process described herein aids in the manufacture of an impact modified polyester or impact modified polyester article in which thermal gradients are minimized. As a result, the product produced by the process of the invention additionally has a lower degree of thermal stress memory than many previously available products. The low degree of stresses and highly developed crystals result in a product with improved dimensional stability at elevated temperatures which at the same time provides an efficient gas barrier.

A third advantage of the invention is that controlled cooling in the melt-to-mold process described herein aids in the manufacture of a impact modified polyester in which the precipitation of impact modifier is controlled. As a result, the product produced by the process of the invention additionally has increased impact strength at lower temperatures where polyesters tend to mechanically function in a brittle manner, while retaining its superior gas permeation and dimensional stability characteristics.

What follows for a more complete understanding of the invention is a brief discussion of the theoretical aspects of controlled precipitation of impact modifiers and polyester crystal formation that are thought to explain the uniqueness of the product and controlled cooling process of the invention. Nevertheless the invention is not intended to be limited by this theoretical explanation.

The precipitation of impact modifiers which dissolve into a polyester is thought to form a eutectic alloy. As used herein, a eutectic alloy is a liquid of a fixed composition which freezes to form a mixture of two basically different solids or phases. A homogeneous liquid of this composition on slow cooling freezes to form a mixture of particles of the one compound embedded in a matrix of the other. This therefore is the formation of a natural composite. By controlling the solidification of the melt, the size and distribution of the impact modifier precipitates from the melt can be controlled, which allows control of the mechanical properties. If, however, the liquid composition is thermally quenched, little or no precipitation will occur leaving a material presumably without the composite affects of the precipitated compound. The precipitation can also be controlled either by homogenous nucleation or by heterogeneous nucleation with the addition of a nucleating agent or the introduction of a suitable surface for nucleation.

Crystallizable polymers generally exist at ambient temperature as a mixture of amorphous, crystalline and boundary phases. In the amorphous phase, the polymer chains are generally without large scale order with respect to one another. In the crystalline phase the polymer chains are highly ordered, and in the boundary phase between the crystal and amorphous phases, the polymer chains are intermediate in order as compared to the other two phases. The percentage of a crystallizable polymer material that is in each of the above-mentioned three phases is dependent on the thermal history of the material.

At sufficiently high temperature (i.e., hereinafter referred to as the « melting temperature ») or above, and after sufficient time if the polyester has had a previous thermal history, polyesters achieve a completely amorphous or substantially completely amorphous, molten state. The melting temperature of a polyester is most accurately determined by DSC, as the temperature at which the endothermic melting of the polyester is achieved. For example, for a typical polyethylene terephthalate, this temperature is about 250°C. Polyesters which have not been previously cooled below the melting temperature, and thus have no thermal or mechanical history embedded therein also exist in the amorphous state.

Generally, as the temperature of an amorphous crystallizable polyester is lowered, an upper crystallization onset temperature from melt is reached, at which point the polymer chains begin to order and crystallization of the material begins. The « upper crystallization onset temperature from melt » as used herein is the temperature, at atmospheric pressure, wherein the exothermic dynamic crystallization reaction in a cooling crystallizable polymer melt begins, as determined by the beginning of the exothermic dynamic crystallization reaction measured by cooling differential scanning calorimetry. For molter PET, the upper crystallization onset temperature is between from about 170°C to about 210°C at a cooling rate of about 20°C/min. As used herein, the « dynamic crystallization reaction » and « dynamic crystallization » refers to the aforementioned crystallization of a polyester upon cooling to ambient temperature from the melt temperature or above.

As the crystallizable polymer continues to cool, a lower boundary crystallization temperature from melt is reached, where at the dynamic crystallization from melt ceases. The « lower boundary crystallization temperature from melt » is that temperature at which the exothermic dynamic crystallization reaction ceases, again as determined by cooling differential scanning calorimetry. For PET, the lower boundary crystallization temperature is from about 180°C to about 150°C, at a colling rate of about 20°C/min. Thus the temperature window in which a polymer cooling from the melt temperature is able to crystallize is localized to that temperature range between the upper crystallization onset temperature from melt on the high temperature end to the lower boundary crystallization temperature from melt on the lower temperature end.

In the temperature range between the upper crystallization onset temperature from melt and the lower boundary crystallization temperature from melt, there exists a temperature at which the rate of crystallization of the polymer is at a maximum. This temperature is referred to herein as the « peak crystallization rate temperature from melt », also sometimes referred to as the maximum crystallization rate temperature. The peak crystallization temperature from melt is that temperature in a cooling differential scanning calorimetry analysis where the heat flow of the dynamic crystallization reaction is at a minimum. For PET, the peak crystallization rate temperature from melt is generally from about 160°C to about 200°C, at a cooling rate of about 20°C/min. As is also the case for the upper and lower temperature boundaries at which crystallization from melt can occur, the peak crystallization rate temperature from melt is dependent upon the specific polymer, particularly with respect to the chain length and chain substituents. Additionally, each of these temperatures is dependent upon the rate of cooling of the polyester, with faster cooling rates tending to decrease each of these characteristic dynamic crystallization temperatures. For example, at cooling rates greater than about 90°C/min, the peak rate of crystallization from melt is suppressed and thus the amount of crystallization in the resultant ambient temperature material is lower than that which is attainable with a lower cooling rate. Such a suppression of crystallization is referred to as « thermal quenching » of crystallization.

Although each of the characteristic temperatures associated with dynamic crystallization is variable, each of these temperatures for a given polymer or copolymer may easily ascertained by one skilled in the art, using DSC analysis.

While the polymer is maintained within the temperature window defined by the upper crystallization onset temperature from melt and lower boundary crystallization temperature from melt, crystallization of a polymer continues until all material that will naturally undergo crystallization exists in the crystalline state. Alternatively, if the polymeric material is continually cooled, while the polymer is in the above-defined temperature window conductive to crystallization, it crystallizes to the maximum extent possible for the given rate of cooling and the given polymer.

Thus, in contrast to the conventional glass-to-mold process wherein crystallinity is controlled through the recrystallization reaction, control of crystallinity in the process of the present invention is achieved through control of the length of time the polymer is within the above-defined temperature window at which dynamic crystallization occurs and the temperature at which the crystallization reaction is performed. For example, if the peak crystallization rate temperature is used, a minimum amount of time is required for the crystallization reaction to complete. Sub-optimal crystallization temperatures require a longer time at temperature for the completion of the dynamic crystallization reaction.

It is considered important in the practice of the invention that the time at temperature within the afore-mentioned window of dynamic crystallization, be sufficiently long that the material has a controlled precipitation of an impact modifier to maximize impact properties while achieving a state of crystallization to which the polyester naturally strives, such that upon reheat, there is little, if any, recrystallization as determined by heating DSC analysis and expressed as the enthalpy of recrystallization, $\Delta Hr$.

Crystallinity as defined herein is measured by differential scanning calorimetry, for example with a Perkin Elmer-brand « 7 Series » Thermal Analysis System, as opposed to the viscosity measurement method that has been commonly used previously by others. It is emphasized that the two techniques for determination of the crystalline content of a polyester are not directly related such that values calculated by one technique can be converted to a value corresponding to that derived from the other technique. This is because the density measurement of crystallinity is dependent upon additives to a polyester composition. Calculations based on such a density measurement will, therefore, not always adequately represent the true crystallinity of a material.

By contrast, through use of differential scanning calorimetry, the behavior of the polyester can be isolated from that of any additives, and thus the degree of crystallinity directly calculated from the DSC thermogram as is known in the art.

One aspect of the invention provides for a process for producing a crystallizable impact modified polyester that provides an improved gas barrier, has little or no tendency to recrystallize on heating and has improved dimensional stability upon heating to temperatures up to about 200°C.

Polyesters suitable as starting material for making a impact modified polyester with the improved gas permeability, degree of crystallization and dimentional stability of the material produced by the process of the invention are commercially available. For example, polyethylene terephthalate is available from Eastman Kodak Chemicals as product number 9902 and from Goodyear Tire and Rubber as product number 9506. However, as discussed below, these materials must be heated to above their melting temperature for sufficient time to render them into a completely or substantially completely amorphous, molten state.

Due to the desirability of the absence of a process step which requires reheating a commercially available polyester to the molten state, it is preferred that the impact modified polyester produced by the process of the invention be made from the molten product of the polyester formation reaction. Thus, the polyester product produced by the process of the invention may be made from precursor materials as known in the art. These precursors are generally saturated diols (or other polyols) and unsaturated dibasic acids or their anhydrides.

Suitable diols include, for example, ethylene glycol ; propylene glycol ; diethylene glycol ; and 2,2-dimethyl-1,3-propanediol; 1,4 butane diol ; 1,4 cyclohexane dimethanol ; 2,2,4-trimethyl-1,3-pentane diol ; 2-méthyl-2-propyl-1,3-propane diol ; 1,3 butane diol ; 1,5 pentane diol ; 1,6-heaxane diol ; 1,8-ocatane diol ; 1,9-nonane diol ; 1,10-decane diol ; 1,12-dodecane diol ; 1,2-cyclohexanedimethanol ; 1,3-cyclohexanedimethanol ; 2,2,4,4-tetramethyl-1,3-cyclobutane diol ; 1,2-xylene diol ; 1,3-xylene diol ; and 1,4-xylene diol. Diols for preparing the product produced by the process of the invention may generally comprise from about 5 parts to about 95 parts of the final polyester. The preferred diols are ethylene glycol, propylene glycol and 1,4-butane diol, with the most preferred being ethylene glycol.

Suitable dibasic acids or acid anhydrides include maleic acid, fumaric acid, terephthalic acid (1,4-benzenedicarboxylic acid), 2-chloroterephthalic acid ; phthalic acid (1,2-benzenedicarboxylic acid) and isophthalic acid (1,3+benzenedicarboxylic acid) ; 2,6-naphthalene dicarboxylic acid ; 2,7-naphthalene dicarboxylic acid ; and 4,4'-biphenyl dicarboxylic acid or combinations thereof. Dibasic acid for preparing the product produced by the process of the invention may comprise from about 95 parts to 5 parts, by weight, of the final polyester. Preferred dibasic acids in the practice of the invention are terephthalic acid and naphthalic acid, with terephthalic acid being most preferred.

Derivatives of these diols and dibasic acids may also be used as starting material for producing the product produced by the process of the invention. With respect to diols, reference is specifically made to their $C_{(1-6)}$ alkyl-substituted derivatives, while with respect to dibasic acids, reference is specifically made to monoalkyl- and dialkyl esters of terephthalic acid, such as the 1-methylester and 1,4-dimethylesters of terephthalic acid.

The polyol and dibasic acid starting materials may be reacted either through the direct esterification process (when using the free acid as starting mateiral) or the ester-interchange process (for example, when starting with the methylester derivative of terephthalic acid). The polyesters thereby generated are then exposed to high temperature (e.g., from at least about 240°C, preferably about 280°C) at which point melt polymerization of the materiel proceeds. The degree of polymerization can be determined through use of torque meters connected to stirrers that are in contact with the polymer melt. As the polymer chain length increases, the viscosity of the melt increases. The reaction is then stopped when the viscosity reaches the desired value as indicated below.

Although it is preferred that the process of the invention begin with the molten product of the polyester formation reaction, it should be recognized that any molten, amorphous or substantially amorphous polyester, is suitable as a starting material, since the process of the invention requires only that the base polyester be brought to an amorphous or substantially amorphous molten state.

In addition to the above, the polyester polymer produced by the process of the present invention may comprise either a homopolymer or copolymer, so long as the material is capable of achieving a crystallinity of at least 10 % as measured by cooling DSC and as exemplified below. The polyester produced by the process of the invention may also be a blend of homopolymers, copolymers or heteropolymers as long as the requisite degree of crystallinity is met.

The preferred homopolymers in the practice of the invention are polyalkylene terephthalates and naphthalates, such as polyethylene terephthalate, polybutylene terephthalate and polyethylene naphthalate. The most preferred homopolymer is polyethylene terephthalate. Suitable copolymers for use in the invention are derived, for example, from about $C_{(1-6)}$, non-soluble and partially miscible olefins, such as propylene, butylene, ethylene methyl acrylate, ethylene butyl acrylate, methyl butyl styrene, polyethyl adipate, epichlorohydrin, maleic acid, and fumaric acid.

Conventional catalysts may also be employed in making the polyester produced by the process of the invention. Such catalysts, which include transition metal compounds such as antimony acetate, antimony trioxide, titanium alkoxides, stannous alkoxides, and the like, may be used at conventional concentrations.

The impact modified polyester produced by the process of the present invention may have an intrinsic viscosity of from 0.6 dl/g to 1.3 dl/g as measured at 25°C in a 60:40 by weight mixture of phenol:tetrachloroethane at a concentration of about 0.5 g/100 ml. Preferably, the impact modified polyester produced by the process of the invention has an intrinsic viscosity of from 0.6 dl/g to 1.0 dl/g, and most preferably the intrinsic viscosity of the impact modified polyester produced by the process of the invention is from 0.6 dl/g to 0.95 dl/g, measured as described above.

The polyester may constitute from about 70 % to about 99 % by weight of the total composition, preferably from about 73 % to about 98 % by weight of the total composition, and most preferably from about 85 % to about 98 % by weight of the total composition.

The present invention relies in part on the control of the precipitation of the impact modifiers from the base polyester. This is critical because the size and distribution of the precipitated impact modifier has a significant effect on the mechanical properties of the impact modified polyester composition, and on the impact properties in particular. These materials are useful in decreasing the tendency of crystallized polyesters to shatter, particularly at below ambient temperature, for example to a temperature of about -60°C. These materials are also useful in decreasing the variation in impact strength in polyesters at higher temperatures. Impact modifiers are thus most useful in the production of containers for items that are meant to be refrigerated or frozen, but are also desirable in higher temperature applications.

At least two advantages are seen with the present invention over the traditional impact modified polyesters. First, because of the rapid cooling rate used in producing traditional impact modified polyesters, much of the impact modifier that dissolved into the polyester never precipitates upon cooling. This creates the need for employing a relatively large quantity of impact modifier to achieve acceptable results even when given a similar dispersion of impact modifier particles in the polyester as initially present in the composition produced by the process of the invention. Since the impact modifiers generally commercially available represent a considerable expense in producing a product, efficiency in use of the impact modifier represents a significant production cost savings.

Second, the present invention provides for a process leading to improved impact properties over traditional dispersion methods by the controlled precipitation of the impact modifiers from the melt, which provides for improved uniformity of the impact modifier precipitate, which then results in improved impact resistance. Of the many factors that can be used to control size and distribution of the melt precipitates, the cooling rate of the composition is though to be the most important since it allows for the most efficient use of impact modifier, and uniformity of the particle size and distribution is better controlled.

Most known impact modifiers are suitable for use in practicing the invention. Examples of these impact modifiers include polycarbonates, glycol-modified PET, polyarylates, polybutene, polybutylene, methyl butyl stryrene, polybutene-polyethylene copolymer, polysulfones, polymethylmethacrylate, polyisobutylene, polyisobutylene-polyethylene copolymer, polymethylmethacrylate-polycarbonate shell-core modifier, polyethylene-methyl acrylate copolymer, polyethylene-butylacrylate copolymer, polyethylene-ethylacrylate copolymer, polyethylene vinyl acetate copolymer, polyethylene-maleic acid copolymers, polypropylene, isopropylene, polybutadiene or combinations of these polymers in copolymer or blended form and the like as is known in the art. The preferred impact modifiers are $C_{(1-6)}$alkylene-$C_{(1-6)}$ alkylacrylate copolymers having an acrylate comonomer content of from about 5 % to about 60 % by weight. Particularly preferred in the practice of the invention are ethylene-methacrylate copolymers and ethylene-butylacrylate copolymers.

By « particle size and distribution » as used herein, it is meant the average particle diameter of all the impact modifier precipitate particles in the composition, and the standard deviation of all of the particles from this average particle diameter. The useful particle size and distribution of the impact modifier precipitate after the cooling cycle for the present invention is from .1 to 10 microns with a standard deviation from .1 to 4 microns, preferably from 0.1 to 5 microns with a standard deviation from 0.1 to 2 microns, and most preferably from 0.1 to 2 microns with a standard deviation from 0.1 to 1 micron.

The impact modifier may create a polyester supersaturated solution. The desired amount of impact modifier which is dissolved into the polyester is dependent on that which is required to give the particle size and distribution necessary for the improve impact properties. It should be remembered that in the present invention not all of the impact modifier is required to be dissolved in the polyester in order to achieve optimal impact properties ; rather it is the amount of impact modifier, and the particle size and distribution of the precipitated impact modifier that is important. The amount of dissolved impact modifier is generally from about 0.1 % to about 30 % by weight as compared to the total weight of the composition, preferably from about 1.0 % to about 25 % by wieght, and most preferably from about 2.0 % to about 15 % by weight, as compared to the total weight of the composition.

The composition produced by the process of the invention may also include a compatibilizer to promote the surface attraction and bonding between the polyester and the impact modifier. The amount of compatibilizer is generally from about 0 % to about 29 % by weight as compared to the total weight of the composition, preferably from about 0 % to about 25 % by weight, and most preferably from about 0 % to about 13 % by weight, as compared to the total weight of the composition. Examples of compounds which can be used as compatibilizers include polycarbonate, acetal, aromatic polyketone, acrylonitrile, polyamide-imide, polyarylate, polyetherimide, polyamide, polyphenylene oxide, polyphenylene sulfide, polyimide, polyarylsulfone, polysulfone, polyurethanes, epoxy resins, and modified polyester resins.

The impact modified polyester produced by the process of the invention may also be employed in a composition to improve the gas barrier and thermal dimensional stability of articles made from the composition. Other ingredients in such a composition include nucleants, heat stabilizers, mold release agents, and trimming agents. It should be understood that the additives are not required in order to produce the improved crystallinity, gas permeability, thermal dimensional stability and improved impact characteristics of the product produced by the process of the invention.

When desired, a composition comprising the impact modified polyester produced by the process of the invention may include nucleants. These materials may aid in increasing the number of polyester crystals and in the precipitation of the impact modifier, as well as rate of crystal & precipitate formation in the composition of the invention. Examples of suitable nucleants include inorganic heterogeneous nucleants, such as silica, talc, calcium carbonate, gypsum, carbon black, titanium dioxide, mica, powdered glass, finely divided metals, metallic salts such as sodium benzoate, ionomers such as the ethylene ionomer, graphite, glass fiber, carbon fiber, ceramic fiber, metal fiber, inorganic as well as others as known in the art.

Homogeneous organic nucleants may also be incorporated in the composition produced by the process of the invention. For example, when the polyester is the preferred polyethylene terephthalate, finely divided particles made of low molecular weight (i.e., $M_w$ below about 6500-8500) PET may serve as nucleant. Similarly, with a polybutylene terephthalate base polymer, low molecular weight PBT may be incorporated in the composition to serve as nucleant. The preferred homogeneous organic nucleants are these low molecular weight PET and PBT for their respective base polyesters.

Nucleants may also be of the heterogeneous organic type. For example, low molecular weight polyethylene naphthalate ($M_w$ less than about 6500-8500) be used as nucleant for a polyethylene terephthalate base polymer, or polyethylene terephthalate may be used as nucleant for a polybutylene terephthalate base polymer, and so on. When desired in the practice of the invention, the preferred heterogeneous organic nucleants for use in a composition of the preferred polyethylene terephthalate homopolymer, is methyl butyl styrene, and the $C_{(1-6)}$ polymers, such as ethylene-propylene copolymer, ethylene-butylene copolymer, ethylene-pentene copolymer, and polymethylpentene.

When included in the composition produced by the process of the invention, nucleants may be added between from about 0 % to about 5 % by weight as compared to the total weight of the composition. Preferably, nucleants are used in from about 0 % to about 3 % by weight, and most preferably from about 0 % to about 2.8 %, as compared to the total weight of the composition. Nucleants are also generally preferred to have an average particle size from about 0.05 to about 10 microns in diameter.

Heat stabilizers may also be included in the product produced by the process of the invention. This additive is useful for inhibiting oxidation of the base polyester at elevated temperature and thus is desirable for inclusion in compositions which are designed to be heated, such as ovenable food trays. The use of heat stabilizers is described, for example, in U.S. Patent Nos. 3,987,004 ; 3,904,578 ; and 3,664,482. Suitable heat stabilizers useful in the product produced by the process of the invention include alkylated substituted phenols, bisphenols, substituted bisphenols, thiobisphenols, polyphenols, polybisacrylates, aromatic amines, organic phosphites and polyphosphites. Of the aromatic amines, reference is made to primary polyamines, diarylamines, bisdiarylamines, alkylated diarylamines, ketone-diarylamine condensation products, aldehyde-diarylamine condensation products and aldehyde imines. Specific reference in regard to polyphenols useful as a heat stabilizer in the product produced by the process of the invention is made to tetrakis(methylene-(3,5-ditertiarybutyl-4-hydroxyphenyl)-propionate)methane and 1,3,5-trimethyl-2,4,6-tris(3,5-ditertiarybutyl-4-hydroxybenzyl)benzene. Commercially available heat stabilizers may also be suitably employed in the product produced by the process of the invention.

When added to the composition produced by the process of the invention, heat stabilizers are useful from about 0 % to about 0.04 % by weight as compared to the total weight of the composition. These materials are preferably included to between from about 0 % to about 0.035 % by weight, ans most preferably to between from about 0 % to about 0.03 % by weight, as compared to the total weight of the composition.

Mold release agents may also be included in the composition produced by the process of the invention. These materials aid in the removal of a shaped article from the shaping surface. Suitable mold release agents include $C_{(1-6)}$ olefins (copolymer or homopolymer versions), low molecular weight polymers such as polyethylene, and low molecular weight waxes. Zinc stearate is also known as a useful mold release agent. These mold release agents are preferable for inclusion in the composition produced by the process of the invention as they additionally serve as trimming agents which facilitate the trimming of excess material from a shaped article of the invention.

Mold release agents are suitably includes in the composition produced by the process of the invention as is usual in the art, generally at from about 0 % to about 3.0 % by weight, as compared to total weight of the composition.

Colorants may also be added to the composition produced by the process of the invention. In addition to potential nucleating agents carbon black and titanium dioxide, reference is also made to non-nucleating colorants such as phthalocyanine blue, solvent red 135, and disperse yellow 64. To determine if a particular colorant is also a nucleating agent, comparison is made of DSC thermograms as to the crystallization onset temperature from melt, peak crystallization rate temperature from melt and total enthalpy of crystallization of the polyester with and without the colorant. These values are essentially unchanged by the presence of a non-nucleating colorant. The amount of colorant required for a particular color is easily determined by those in the art.

As is evident from the foregoing, in some cases an additive to the composition produced by the process of the invention performs more than one function in the final product. For example, low molecular weight olefins may act as an impact modifier, a mold release agent, a trimming agent, or a carrier for colorants, stabilizers, and the like. As another example, carbon black may act as both a pigment and a nucleant. Imapct modifiers may also act as nucleants, mold releases, trimming agents in the present process. Thus, depending upon the final end use of the composition produced by the process of the invention, different additives will be preferred as is known in the art.

The polyester product produced by the process of the invention is defined first in that the degree of crystallinity is between from 10 % to 50 %, preferably from 12 % to 45 %, and most preferably from 15 % to 40 % each as determined by differential scanning calorimetry.

The product produced by the process of the invention is also characterized by improved thermal dimensional stability, in that upon heating from -60°C to 200°C, there is less than 6 % shrinkage in any linear dimension, more preferably less than 5 %, still more preferably less than 4 %, yet more preferably less than 3 %, more preferably less than 2 %, and most preferably less than 1 % in any linear dimension.

The product produced by the process of the invention further provides for a gas barrier as characterized by an oxygen permeability of from 0.2 to 4.9 cc-mil/100 in$^2$ (650 cm$^2$)-24 hr-atm at 23°C and at 60 % relative humidity outside/100 % relative humidity inside. Preferably, the oxygen permeability is from 0.2 to 4 cc-mil/100 in$^2$ (650 cm$^2$)-24 hr-atm at 23°C, more preferably from 0.2 to 3. Even more preferably from 0.2 to 2 cc-mil/100 in$^2$ (650 cm$^2$)-24 hr-atm at 23°C. Yet more preferably from 0.2 to 1.5 cc-mil/100 in$^2$ (650 cm$^2$)-24 hr-atm at 23°C. Most preferably the oxygen permeability is from 0.2 to 1.0 cc-mil/100 in$^2$ (650 cm$^2$)-24 hr-atm at 23°C. Each of the above permeabilities being at 60 % relative humidity outside/100 % relative humidity inside.

The product produced by the process of the invention is still further characterized by an enthalpy of recrystallization, $\Delta Hr$, between 100°C and 170°C, as determined by heating differential scanning calorimetry, of from 0 to -4.0 cal/g at a heating rate of 20°C/min. The product may also have an enthalpy of recrystallization of from 0 to -3.0 cal/g, preferably from about 0 to -2.5 cal/g, more preferably from 0 to -1.0 cal/g, and most preferably 0 cal/g, as determined by heating DSC in the temperature range of from 100°C to 170°C and at a heating rate of about 20°C/min.

In making the product produced by the process of the invention from previously synthesized polyester, the base polyester is first heated at 350°F (176,7°C) for greater than 6 hours in a desiccating oven in order to lower the moisture content of the material to less than about 110 ppm, preferably to less than about 50 ppm. Other additives, such as a polyethylene mold release agent may also require heating to lower the moisture content as is known in the art.

Next, the polyester base material and any desired additives are mixed together, preferably in a mixing screw of an extruder, and heated to at or above the melting temperature of the polymer for a time.sufficient to provide for a completely amorphous or substantially completely amorphous molten polyester. In the case of the preferred impact modified polyethylene terephthalate, the temperature is preferably brought to between from 450°F (232,2°C) to 610°F (321,1°C), most preferably from 480°F (248,9°C) to 580°F (304,4°C). Particularly if the polyester source material has a prior thermal history, it is important that the composition be kept at this higher temperature for a sufficient time to achieve the desired molten state. The particular length of time will vary according to the precise polyester of the composition as well as to the amount, if any, of material that has had a previous thermal history.

If oxygen permeability is not a major consideration, the impact modified polyester can be processed by any process which results in the control of the precipitation of impact modifiers in the size and distribution listed above. If, however, lower oxygen permeability is desired then, in contrast to conventional processes for producing impact modified polyesters and articles made of this material, after formation of an amorphous or substantially amorphous molten polyester of correct viscosity, the polyester material is contacted to a surface capable of imparting a shape on the composition, such as a laminating table, or a surface of a mold cavity. The impact modified polyester material may be contacted with the surface by any of the known techniques, such as extrusion molding or injection blow molding.

U.S. Patent No. 4,061,706 and U.S. application No 07/165,170, now allowed, both describe an apparatus suitable for imparting shape on the impact modified polyester produced by the process of the invention so as to make a thermoformed article. However, any material capable of withstanding the temperatures used in the process of the invention without substantial distortion may be used as the surface capable of imparting shape on the impact modified polyester or composition produced by the process of the invention. Additionally, the material of which the surface is made must not chemically react with the impact modified polyester or any components of the composition produced by the process of the invention. The preferred surface is made of metals or metal alloys, as these materials are reusable and thus highly economical, relatively chemically inert with respect to the components of the composition of the invention, provide high rates of heat transfer, readily controllable temperature, and a uniform temperature throughout. The preferred material fort the shaping surface in the process of the invention is aluminum.

The temperature of the surface in the process of the invention is within the range of temperature wherein crystallization occurs in the cooling impact modified polyester (i.e., from between at or above the lower crystallization onset temperature to at the higher crystallization onset temperature). Preferably, the surface to which the impact modified polyester is applied is at or near the peak crystallization rate temperature for the polyester material, and most preferably, the temperature of the surface is at the peak crystallization rate temperature. The material is then kept at this temperature for a time sufficient to induce a material with the desired impact strength dimensional stability, gas permeability and low enthalpy of recrystallization.

It emphasized that to produce the product produced by the process of the invention, the time at temperature also determines the degree of crystallinity in the final polymer product. Thus, at temperatures below the peak crystallization rate temperature, longer residence times of the polymer on the surface would be required in the process of the invention, than would be were the material at the peak crystallization rate temperature. Thus, when speed of production is desired in making the product produced by the process of the invention, it is most preferred that the impact modified polyester material is contacted with a surface at the peak crystallization rate temperature. However, if longer residence times are permitted, virtually the same material can be produced at non-optimal crystallization rate temperature (i.e., elsewhere within the temperature window within which dynamic crystallization can occur). It should be generally understood that the longer the time the impact modified polyester is in the window wherein dynamic crystallization can occur, the better. This is because long residence times at the correct temperature ensures that the material has reached the level of crystallinity it naturally tends to and thus minimizes any recrystallization upon heating. In the process of the invention using the preferred polyethylene terephthalate homopolymer, the time of contact between the impact modified polyester or composition may be from about 1 second to about 5 minutes, between 2 seconds and about 4 minutes, between 3 seconds and about 3 minutes, between about 4 seconds and about 2 minutes, preferably between about 6 seconds and about 1.9 minute, and most preferably between about 8 seconds and about 114 seconds.

Next in the process of the invention, the impact modified polyester material contacted to the surface is cooled at a rate of from between 1°C to 80°C per minute and most preferably between from 20°C and 80°C per minute. The rate of cooling of the product produced by the process of the invention is deemed important in that what is meant to be avoided is the thermal quenching of the crystallization process. Thus the melt-to-mold process of the present invention is directly the opposite of the conventional glass-to-mold thermoforming processes, in that in the latter, thermal quenching of crystallization is desired. After sufficient cooling of the impact modified polyester, preferably to below the lower boundary crystallization temperature from melt, and most preferably below the Tg of the impact modified polyester, the product produced by the process of the invention may then be removed from contact with the heated surface and cooled to ambient temperature. This final cooling to ambient temperature is most conveniently achieved by radiative cooling in air.

In other applications of the invention, the cooling process may be desired to be at different rates for different parts of the impact modified polyester or composition. In this way, different regions of the shaped article of the invention may have different degrees of crystallinity, with the resulting differences in properties, such as impact resistance. Thus, for example, a bottle made of the impact modified polyester or composition produced by the process of the invention may have a higher crystallinity and resistance to thermal deformation at the part comprising the mouth of the bottle, than does the body of the bottle. Such an application may be preferable, for example, in an automated hot-fill process wherein a cap is applied to the bottle shaortly after filling.

In many applications of the invention, for example dual ovenable food containers, it is desired that the cooling of the impact modified polyester or composition produced by the process of the invention be at a uniform rate, and controlled such that the cooling process is isothermal or substantially isothermal with respect to the product. Cooling in this way minimizes the formation of internal stresses in the polymer structure, and thus minimizes the amount of stress release upon heating, as well as post-mold shrinkage. By isothermally as used herein, it is meant that the temperature of the impact modified polyester or composition produced by the process of the invention be essentially the same throughout, such that thermal gradients are not formed in the material or are kept to a minimum. By substantially isothermally, it meant that any deviation from isothermal cooling is minimal such that the desired thermal dimensional stability of the product produced by the process of the invention results in deformation of the product upon heating from about -60°C to about 200°C that does not exceed about 6 %, preferably not exceeding about 5 % and most preferably less than 3 %.

As a result of the melt-to-mold thermoforming process of the invention, the crystals in the impact modified polyester so formed are highly developed, uniform in size and can be preferentially developed in three dimensions. Again, in contrast to conventional processes, wherein the crystals are in a large range of sizes and, in general, smaller than those of the present material and preferentially develop in primarily two dimensions. As a further result of the dynamic crystallization process, articles formed by the process of the invention are homogeneous throughout with respect to their morphology.

The impact modified polyester produced by the process of the invention and article produced by the process of the invention have many useful advantages over impact modified polyester materials heretofore available. Chief among these are high impact strength, dimensional stability at elevated temperature, low gas permeability, low degree of recrystallization upon heating as characterized by the ΔHr, each as described above, that the impact modified polyester produced by the process of the invention imparts on the article of manufacture.

Another advantage of the invention is that since the product is molded directly from the molten state, the detail of the mold is more readily imparted on the shaped article. This is in contrast to lower temperature molding techniques where not all fine detail is imparted into the shape of the final product. Thus the invention provides for a process leading to impact modified polyester articles that have more intricate design, thereby allowing for more distinguishing marking between similar products.

A further useful advantage of the product produced by the process of the invention is that the material is recyclable by the methanolysis process of recycling polyesters. Thus, in addition to the cost savings afforded by recyclable products, the product produced by the process of the invention is environmentally sound.

The manufacture of a myriad of articles are possible and useful in the practice of the process of the invention. Generally, any article that is currently made of impact modified polyester material is suitable to be made of the material produced by the process of the invention. Preferred uses are to those articles that take special advantage of the gas permeability, thermal dimensional stability and improved impact strength of the impact modified polyester of the invention.

By way of example and not by way of limitation, the following articles are given to indicate potential articles manufactured under the practice of the invention : microwavable and ovenable food containers, including trays, boxes, pouches, bags, and the like ; microwavable and ovenable liquid containers, for example for beverages, such as juices, milks, coffees, teas, water, carbonated drinks, and the like ; packaging for materials that require sterilization by chemical, radiation, temperature, pressure or other means, such as pasteurization, autoclaving, peroxide treatment, oxide treatment, gamma radiation and the like, including medical supplies, pharmaceutical containers, chemical containers, food containers, and sundry items ; and medical devices for which low gas permeability is an advantageous characteristic. Additionally, articles produced by the process of the invention, again for example food containers, are also advantageously uses at below ambient temperatures. For example, food containers produced by the process of the invention are useful in frozen food applications, to temperatures at least to about -60°C, as a result of the improved dimensional stability of the product produced by the process of the invention.

Furthermore the product produced by the process of the invention has the additional advantage that it possesses a multi-use dimensional stability as it withstands multiple heat histories, for example temperature sterilization followed later by microwave or conventional oven heating. As another example, the product produced by the process of the invention can withstand multiple sterilization processes, for example retort, or multiple reconstitution processes or a combination of the two due to its excellent dimensional stability.

As impact modified polyesters can be molded into an infinite number of shapes, the details of the shape of the surface are dependent only upon the choice of the article to be made. Thus, for example, in the manufacture of a food container, the surface in the process of the invention is one which imparts to the impact modified polyester composition the shape of a tray. Furthermore, details as to the article are also end use dependent. For example, whether a food container is to have one or multple spaces capable of independently holding food. Products, such as food trays and similar containers are preferably made by a extrusion molding process in the practice of the invention.

Another article produced by the process of the invention for which the impact modified polyester composition is useful is a bottle. Since the impact modified polyester provides a superior gas barrier to other currently available materials, a bottle made of the impact modified polyester produced by the process of the invention is particularly useful for use with beverages, for example carbonated beverages, where the contents are under pressure. On the other hand, a process leading to containers for holding items under vacuum is also provided by the present invention, again due to the superior gas permeability characteristics of the impact modified polyester polymer. Containers of this type are preferably made by a blow molding process in the practice of the invention. The product produced by the process of the invention may, but need not, be of uniform thickness as is desired by the end user.

There are numerous advantages provided by the process of the invention and the resulting products over those currently available. Foremost among these derive from the improved impact strength, low gas permeability and high dimensional stability of the materiel produced by the process of the invention. As used as a container for food products, the material produced by the process of the instant invention is microwavable (is penetrable by radiation in the microwave range and does not heat excessively upon exposure to power levels of this radiation used in conventional microwave ovens). The material produced by the process of the invention is also ovenable the temperature of up to about 215°C, with less than 6 % change, and preferably less than 5 % change, in linear dimensional shrinkage. Containers made of the material produced by the process of the invention also increase the shelf life of products stored either under pressure or under vacuum, since the gas permeability of the material is lower than that previously available. Containers made of the material produced by the process of the invention also provide for better taste and texture of the food contained therein, since the product produced by the process of the invention can withstand higher temperatures without warping, breaking of seals, or other product failure, thereby allowing for reduced time at high temperature than is required when using previous products. For example, the product produced by the process of the invention can withstand retort at from about 135°C to about 175°C, which is higher than the retort temperature conventionally used (about 130°C). Accordingly, the length of time of retort at temperature may be substantially reduced with the result that the time a foodstuff must be exposed to the retort temperature will also be reduced.

The following examples are put forth in order to assist those skilled in the art in the practice of the invention by way of illustration, and not meant to be construed as a limitation. Additional background material that may be of help to some practitioners may also be found in the patents referred to herein, each of which are hereby incorporated by reference.

## EXAMPLES

The following oxygen transmission experiments were performed by Alcoa Laboratories « Oxtran » testing, at 23°C and 60RH/100RH.

Example 1.

Melt-to-mold preparation of CPET polyester and DSC analysis.

About 1000 pounds (453,6 kg) of a 50/50 regrind blend consisting of a 0.95 i.v. polyethylene terephthalate homopolymer (Goodyear Tire and Rubber Co. product no. 9506, sold under the tradename Cleartuf®) was pre-dried at about 330°F (165,6°C) for greater than 6 hours in a desiccant dryer to less than 50 ppm water. Approximately 50 pounds (22,7 kg) of a shell-core impact modifier (Rohm and Haas product no. 5375) was also predried at about 210°F (98,9°C) for about 2.5 hrs in the same manner. To the impact modified polymer mix was added about 2.5 pounds (1,1 kg) of a linear low density polyethylene mold release agent (Goodyear Tire and Rubber product no. NA1, having a melt flow index of 0.9) and this mixture was added to the dried polyester in a Welex extruder using a standard polyester mixing screw (Davis Standard Co.). The material was directed through a melt pump to dampen pressure fluctuations, while being kept at a temperature between about 510°F (265,5°C) to about 550°F (287,5°C), and was then extruded in reverse profile with uniform melt temperature as a two dimensional sheet. The polyester sheet was then transferred into a conventional flexible lip-modified coat hanger die (EDI Co.) with the mold temperature set at about 365°F (185°C). The composition resided in the mold for about 40 sec. after which the molded polyester sheet was removed from the mold and allowed to further cool to ambient temperature. The average thickness of the polyester sheet was about 20 mils.

Figure 1 depicts a differential scanning calorimetry (DSC) analysis of 6.200 mg of the CPET material made as described herein. The analysis was performed on a Perkin Elmer 7 Series Thermal Analysis System, as per the manufacturer's recommendations. The curve in Figure 1 depicts DSC analysis of heating the material from about 90°C to about 270°C at a rate of 25°C/min. No exothermic recrystallization reaction is seen in the region between 90°C and the of melting of the material (about 251°C). The degree of crystallinity as calculated by the endothermic reaction between 182°C and 265°C of the material is determined from the calorimetric analysis to be about 29 % using the equation :

$$\% \ C = (\Delta H_T \ x \ 3.434) - 0.2804$$

where $\Delta H_T = \Delta H_r + \Delta H_P$ in calories per gram, and where $\Delta H_r$ is the enthalpy or recrystallization (taken as 0 in the calculation for the material in this Example) and $\Delta H_P$ is the enthalpy of melting (35.757 J/g in this Example), both as determined from the DSC thermogram, and % C is the percent crystallinity of the material.

The foregoing analysis indicates that virtually all of the possible crystallizable material available at a cooling rate of 20°C/min has been crystallized, and that no recrystallization is detectable in this material using DSC. Thus, on heating the above material, there occurs little or no dimensional shrinkage in the polyester product due to recrystallization.

Samples made by the above process were tested as to their gas permeability as reflected in oxygen transmission rate analysis. The testing was done in a 10 cell « Oxtran » (Modern Controls, Minneapolis, MN), and performed by Alcoa Labs using standard package testing techniques. Test were performed at 23°C and 60 % outside relative humidity/100 % inside relative humidity. Transfer analysis was after 5 and 21 days, with these figures extrapolated to yearly transmission rates. The mean transmission rate of seven tests were then used to calculate the oxygen permeability.

Table 1 shows the results of the transmission tests using samples with 25 in$^2$ (162 cm$^2$) surface area and 20 mil average thickness.

TABLE 1

| Sample | 5 day (cc/pkg) | | 21 day (cc/pkg) | |
|---|---|---|---|---|
| | day | year | day | year |
| 1 | 0.0119 | 4.344 | 0.0120 | 4.380 |
| 2 | 0.0119 | 4.344 | 0.0120 | 4.380 |
| 3 | 0.0113 | 4.125 | 0.0113 | 4.125 |
| 4 | 0.0121 | 4.417 | 0.0121 | 4.127 |
| 5 | 0.0120 | 4.380 | 0.0121 | 4.417 |
| 6 | 0.0117 | 4.271 | 0.0118 | 4.307 |
| 7 | 0.0109 | 3.979 | 0.0110 | 4.015 |

The oxygen permeability of this material based on either the 5 day tests or the 21 day tests was 0.94 cc-mil/100 in$^2$ (650 cm$^2$)-24 hr-atm.

Example 2.

A polyester composition was made esentially as described in Example 1, with the exception that the final molded sheet was of an average thickness of about 15 mil. Gas permeation tests were then performed on this material as in Example 1, with the results given in Table 2.

TABLE 2

| Sample | 5 day (cc/pkg) | | 21 day (cc/pkg) | |
|---|---|---|---|---|
| | day | year | day | year |
| 1 | 0.0086 | 3.139 | 0.0088 | 3.212 |
| 2 | 0.0083 | 3.011 | 0.0082 | 2.993 |
| 3 | 0.0093 | 3.376 | 0.0092 | 3.358 |
| 4 | 0.0090 | 3.285 | 0.0089 | 3.249 |
| 5 | 0.0080 | 2.920 | 0.0081 | 2.951 |
| 6 | 0.0072 | 2.630 | 0.0075 | 2.738 |
| 7 | 0.0089 | 3.249 | 0.0085 | 3.103 |

The oxygen permeability based on the five day tests was calculated to be 0.81 cc-mil//100 in$^2$ (650 cm$^2$)-24 hr-atm while the 21 days tests yielded a permeability of 0.79 cc-mil/100 in$^2$ (650 cm$^2$)-24 hr-atm. A Goodyear Tire and Rubber Co. manual gives the oxygen permeability of standard Cleartuf® at 25°C and 0 % relative humidity as 10 cm$^3$-mil/100 in$^2$ (650 cm$^2$)-day-atm for unoriented material and as 5 cm$^3$-mil/100 in$^2$ (650 cm$^2$)-day-atm for oriented material. These tests were based on ASTM Test Method D-1434.

Example 3.

The procedure essentially as set forth in Example 1 was repeated using a 0.80 i.v. virgin polyethylene terephthalate homopolymer (Eastman Kodak product no. 9902) in place of the 50/50 regrind, and 5 % by weight, based upon the total weight of the composition, of the 5375 shell-core impact modifier as in Example 1. No NAI mold release agent was incorporated into this mix. The polyester and impact modifier were both dried heated and molded as in Example 1. The average thickness of the final polyester sheet was 32 mil. A 3.3 mg sample of the polyester was then analyzed by differential scanning calorimetry.

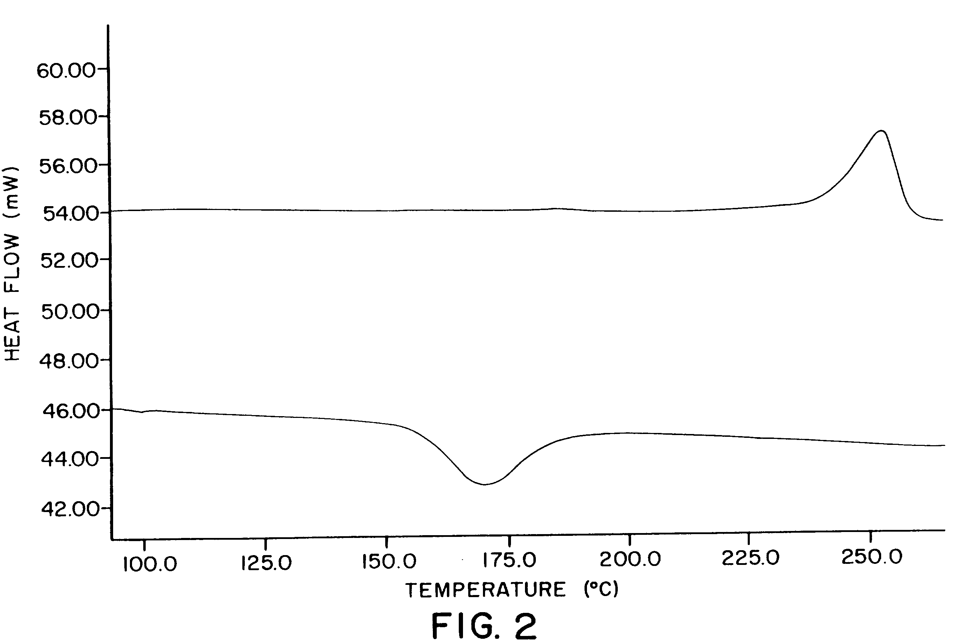

Figure 2 depicts the results of the DSC analysis on 3.3 mg of this material. The upper curve shows no detectable recrystallization at temperatures below the melting temperature of the product upon heating at a rate of 20°C/min. The melting endotherm between 214°C and 265°C corresponds to a $\Delta H_P$ of 42.554 J/g, indicating that the product had a crystallinity of about 34.9 % as calculated in Example 1.

The lower cooling curve exotherm between 205°C and 119°C indicated that at a cooling rate of 20°C/min the polyester material has a maximum crystallinity of about 36 % ($\Delta H_T$=-44.974 J/g). In this, and other cooling DSC thermograms $\Delta H_T$ is the total enthalpy of the dynamic crystallization reaction, such that the percent crystallinity, % C is calculated from the equation :

$$\% \ C = (\Delta H_T \ x \ 3.434) - 0.2804$$

where $\Delta H_T$ corresponds to the enthalpy of dynamic crystallization in cal/gram.

As seen in the lower curve the upper crystallization onset temperature from melt of this material is about 185°C, the peak crystallization rate temperature from melt is about 170°C and the lower boundary crystallization temperature is about 155°C, at this cooling rate.

The results obtained with this material again show that as determined by DSC analysis there is no detectable recrystallization, and thus little if any dimensional shrinkage due to recrystallization of the product upon heating.

Example 4.

The process of Example 3 was essentially repeated, with the exception that the polyester composition also contained 2.5 % by weight, as compared to the weight of the homopolymer, the NA1 impact modifier as used in Example 1.

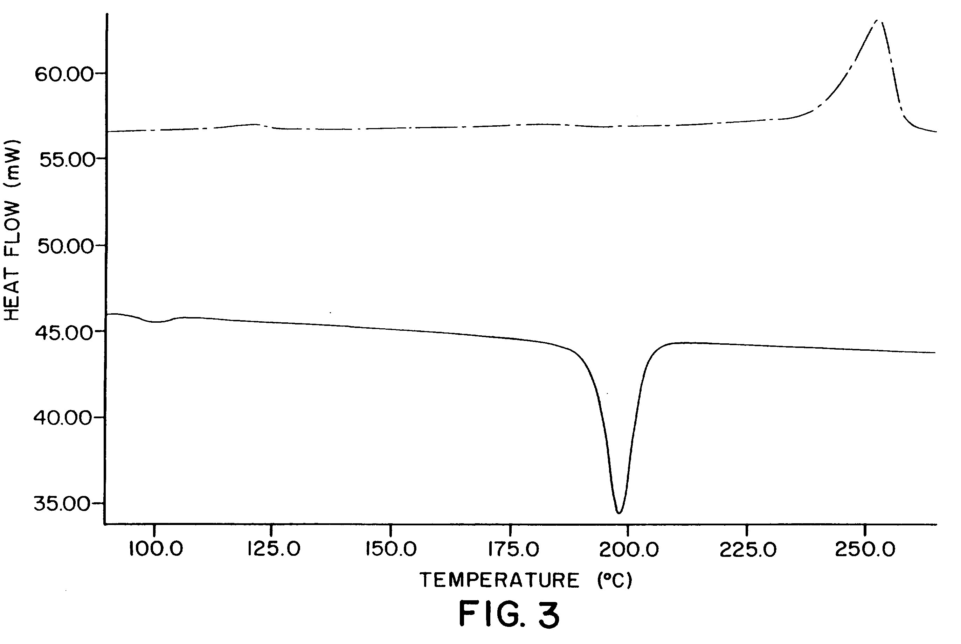

Figure 3 depicts the DSC thermograms of 6.700 mg the product produced in this Example. The upper curve represents the DSC analysis of heating the polyester from about 90°C to about 300°C, at a rate of 20°C/min. Melting of the material was complete at about 270°C. As in the previous Examples, there is no detectable recrystallization of the polyester material during the heating process. The melting endotherm between 162°C and 274°C yields an enthalpy of melting, $\Delta H_P$. of 40.339 J/G indicating that this material has a crystallinity of about 33 %.

The lower curve in Figure 3 is the DSC thermogram obtained by cooling the sample heated above to about 90°C at a rate of 20°C/min. As determined from the crystallization exotherm, the crystallization onset temperature from melt is shown to be about 204°C, the peak crystallization rate temperature is about 198°C and the lower boundary temperature of crystallization from melt is about 188°C. By this dynamic crystallization, the polyester was calculated to have a maximum crystallinity of about 36 % at this cooling rate as determined by DSC. Taken together, the results in this Example indicate that the polyester material formed in the shaping process above contained about 97 % of the amount of crystallizable material obtainable at this cooling rate.

Example 5.

The process essentially as described in Example 1 was repeated with the exception that no NA1 mold release agent was included in the polyester composition.

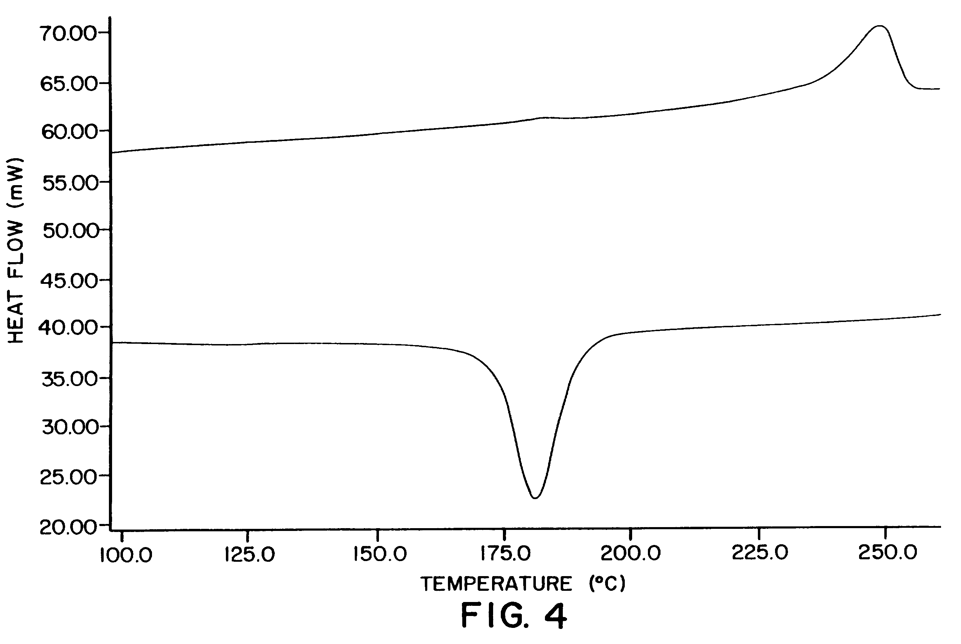

9.4 mg of this material was analyzed by DSC, with the resulting thermogram depicted in Figure 4. Upon heating the sample from about 90°C to about 300°C at a rate of 20°C/min, no recrystallization exotherm was detected (upper curve). Upon cooling this material from about 300°C to about 50°C at a rate of 40°C/min, a dynamic crystallization was obtained as indicated by the crystallization exotherm. As determined from the dynamic crystallization exotherm, the crystallization onset temperature from melt was about 190°C, the peak crystallization rate temperature from melt was about 181°C, and the lower boundary temperature of crystallization from melt was about 165°C. The exotherm corresponds to a crystallinity of about 26 % in this cooled sample. The material produced in the shaping process above has a crystallinity of about 98 % that obtainable at a cooling rate of 40°C/min.

Example 6.

In an illustrative example of the invention, the process essentially as described is performed using only virgin 0.80 i.v. polyethylene terephthalate, without any additional additives. The product is expected to have an undetectable enthalpy of recrystallization at a heating rate of 25°C/min in DSC analysis.

Example 7.

The process as essentially described in Example 1 was repeated using a 0.95 i.v. polyethylene terephthalate homopolymer (Goodyear Tire and Rubber product no. 9506), 2,5 % by weight linear low density polyethylene (NA1), but no impact modifier. However, instead of controlled cooling in the mold, the material of this Example was quick-cooled at about 100°C/min to thermally suppress dynamic crystallization of the polyester during the cooling process and thereby create a sheet of polyester with a very low crystallinity.

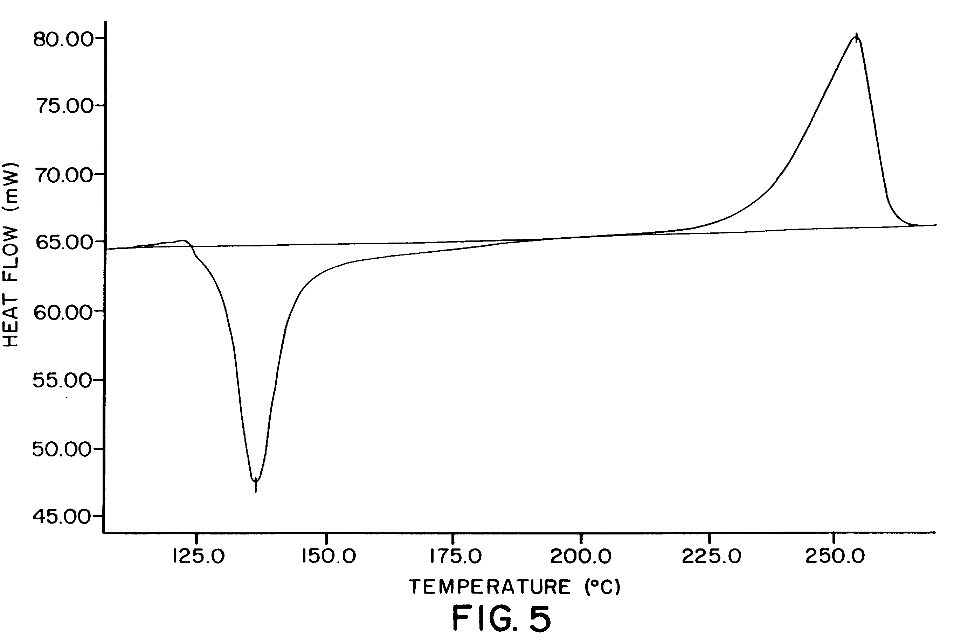

20.6 mg of this material was then analyzed by DSC, with the results of the heating DSC depicted in Figure 5. The material was heated from about 50°C to about 300°C at a rate of 20°C/min. As can be seen by the large recrystallization exotherm located between about 125°C and about 190°C, this material was highly amorphous at ambient temperature, as expected due to the thermal quenching of dynamic crystallization of the material during the prior cooling process. The total crystallinity of the material as calculated as the sum of the $\Delta H$ of recrystallization and the $\Delta H$ of melting indicated that the ambient material had a crystallinity of about 1.8 %.

Due to the large degree of recrystallization upon heating of this highly amorphous polyester, this material has a low dimensional stability resulting from recrystallization. As calculated from the recrystallization exotherm in Figure 5, recrystallization accounted for an increase in crystallinity of this material (amorphous PET) to over about 27 % during the heating process, which would suggest a substantial deformation of the material upon heating.

Example 8.

The process essentially as described in Example 1 was repeated with the polyester being Goodyear Tire & Rubber 0.95 i.v. PET homopolymer (9506) with NA1 added to 2,5 % by weight based on the total weight of the composition, with the exception that the material was cooled in contact with the mold for only 16 seconds, a suboptimal time at temperature for the dynamic crystallization of this material.

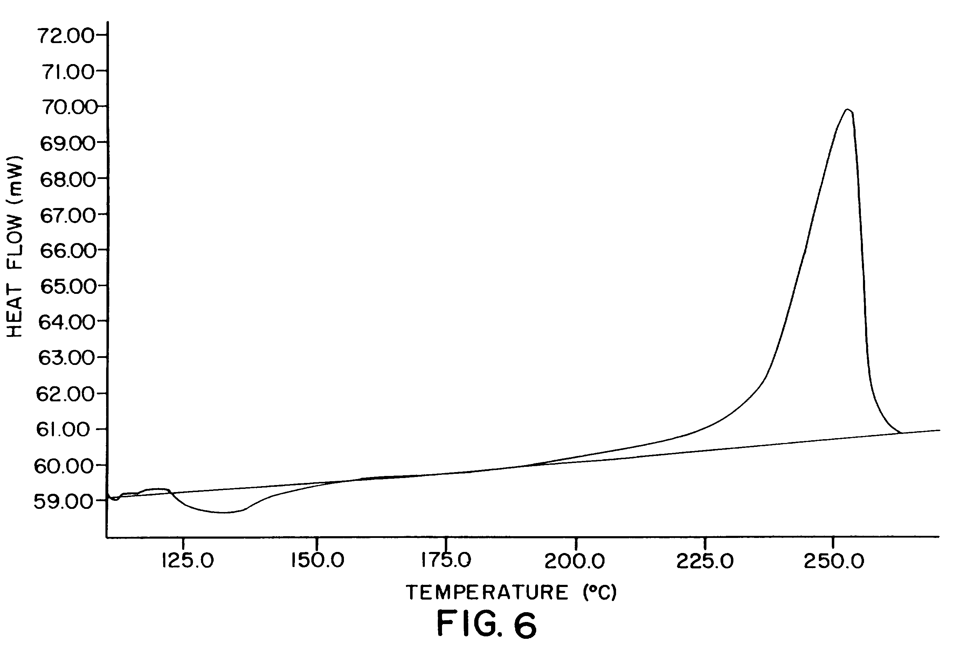

Figure 6 depicts a DSC thermogram upon heating 11.6 mg of the polyester of this Example from about 50°C to about 300°C, at a rate of 20°C/min. An exothermic recrystallization is detected between about 125°C and about 175°C, indicating that this material would exhibit excessive shrinkage at these elevated temperatures due to the recrystallization process. The total crystallinity of this material is calculated from the DSC to be about 26 % of which greater than about 9 % is due to recrystallization upon heating.

Example 9.

Melt-to-mold preparation of CPET impact modified polyester and DSC analysis.

A 50/50 regrind blend consisting of a 0.95 i.v. polyethylene terephthalate homopolymer (Goodyear Tire and Rubber Co. product no. 9506, sold under the tradename Cleartuf®) was pre-dried at about 330°F (165,6°C) for greater than 6 hours in a desiccant dryer to less than 50 ppm water. Approximately 10 % by weight of a shell-core impact modifier (Rohm and Haas product no. 5375) was also pre-dried at about 210°F (98,9°C) for about 2.5 hrs in the same manner. To the impact modified polymer mix was added about 2.7 % by weight of a linear low density polyethylene mold release agent (Goodyear Tire and Rubber product no. NA1, having a melt flow index of 0.9) and this mixture was added to the dried polyester in a Welex extruder using a standard polyester mixing screw (Davis Standard Co.). The material was directed through a melt pump to dampen pressure fluctuations, while being kept at a temperature between about 510°F (265,5°C) to about 550°F (287,8°C), and was then extruded in reverse profile with uniform melt temperature as a two dimensional sheet. The polyester sheet was then transferred into a conventional flexible lip-modified coat hanger die (EDI Co.) with the mold temperature set at about 365°F (18.5°C). The composition resided in the mold for about 40 sec. after which the molded polyester sheet was removed from the mold and allowed to further cool to ambient temperature. The average thickness of the polyester sheet was from about 14 to about 20 mils.

A differential scanning calorimetry (DSC) analysis of the CPET material made as described herein. The analysis was performed on a Perkin Elmer 7 Series Thermal Analysis System, as per the manufacturer's recommendations. The sample was analyzed with a heating rate of 20°C per minute. No exothermic recrystallization reaction is seen in the region between 90°C and the of melting of the material (about 251°C). The degree of crystallinity as calculated by the endothermic reaction of the material is determined from the calorimetric analysis to be from about 26 to about 29 % using the equation :

$$\% \, C = (\Delta H_T \, x \, 3.434) - 0.2804$$

where $\Delta H_T = \Delta H_r + \Delta H_P$ in calories per gram, and where $\Delta H_T$ is the enthalpy of recrystallization (taken as 0 in the calculation for the material in this Example) and $\Delta H_P$ is the enthalpy of melting (35.757 J/g in this Example), both as determined from the DSC thermogram, and % C is the percent crystallinity of the material.

The foregoing analysis indicates that virtually all of the possible crystallizable material available at a cooling rate of 20°C/min has been crystallized, and that no recrystallization is detectable in this material using DSC. Thus, on heating the above material, there occurs little or no dimensional shrinkage in the polyester product due to recrystallization.

Samples made by the above process were tested as to their impact strength using a Gardner type impact test. The tests were conducted at ambient temperature and humidity. Table 3 shows the results of the impact tests.

TABLE 3

| Sample # | Impact (IN-LBS.) | Sample # | Impact (IN-LBS.) |
|----------|------------------|----------|------------------|
| 1 | 32 | 26 | 40 |
| 2 | 32 | 27 | 32 |
| 3 | 24 | 28 | 32 |
| 4 | 32 | 29 | 32 |
| 5 | 24 | 30 | 24 |
| 6 | 32 | 31 | 32 |
| 7 | 24 | 32 | 24 |
| 8 | 24 | 33 | 24 |
| 9 | 24 | 34 | 32 |
| 10 | 32 | 35 | 32 |
| 11 | 32 | 36 | 32 |
| 12 | 24 | 37 | 32 |
| 13 | 32 | 38 | 24 |
| 14 | 48 | 39 | 32 |
| 15 | 24 | 40 | 32 |
| 16 | 32 | 41 | 40 |
| 17 | 32 | 42 | 40 |
| 18 | 24 | 43 | 40 |
| 19 | 32 | 44 | 40 |
| 20 | 24 | 45 | 48 |
| 21 | 24 | 46 | 40 |
| 22 | 32 | 47 | 32 |
| 23 | 32 | 48 | 40 |
| 24 | 32 | 49 | 48 |
| 25 | 32 | 50 | 40 |

The impact strength of this material had a low of 24 in-lbs, a high of 48 in-lbs, and the average impact strength was 32 in-lbs.

Example 10.

Melt-to-mold preparation of CPET impact modified polyester and DSC analysis.

A 50/50 regrind blend consisting of a 0.95 i.v. polyethylene terephthalate homopolymer (Goodyear Tire and Rubber Co. product no. 9506, sold under the tradename Cleartuf®) was pre-dried at about 330°F (165,6°C) for greater than 6 hours in a desiccant dryer to less than 50 ppm water. Approximately 2.5 % by weight of a shell-core impact modifier (Rohm and Haas product no. 5375) was also predried at about 210°F (98,9°C) for about 2.5 hrs in the same manner. To the impact modified polymer mix was added about 1.2 % by weight of a linear low density polyethylene mold release agent (Goodyear Tire and Rubber product no. NA1, having a melt flow index of 0.9) to this mixture was added 18 % by weight of another mixture of consisting of 30 % of a grade 144 polycarbonate sold by General Electric Company and 70 % of a developmental grade ethylene-butyl acrylate copolymer (Chevron Chemical Company no. DS1120-70). This combined mixture was added to the dried polyester in a Welex extruder using a standard polyester mixing screw (Davis Standard Co.). The material was directed through a melt pump to dampen pressure fluctuations, while being kept at a temperature between about 510°F (265,5°C) to about 550°F (287,8°C), and was then extruded in reverse profile with uniform melt temperature as a two dimensional sheet. The polyester sheet was then transferred into a conventional flexible lip-modified coat hanger die (EDI Co.) with the mold temperature set at about 365°F (185°C). The composition resided in the mold for about 40 sec. after which the molded polyester sheet was removed from the mold and allowed to further cool to ambient temperature. The average thickness of the polyester sheet was from about 19 to about 32 mils.

A differential scanning calorimetry (DSC) analysis of the CPET material made as described herein. The analysis was performed on a Perkin Elmer 7 Series Thermal Analysis System, as per the manufacturer's recommendations. The sample was analyzed with a heating rate of 20°C per minute. No exothermic recrystallization reaction is seen in the region between 90°C and the of melting of the material (about 251°C). The degree of crystallinity as calculated by the endothermic reaction of the material is determined from the calorimetric analysis to be about 26 using the equation :

$$\% \ C = (\Delta H_T \ x \ 3.434) - 0.2804$$

where $\Delta H_T = \Delta H_r + \Delta H_P$ in calories per gram, and where $\Delta H_r$ is the enthalpy of recrystallization (taken as 0 in the calculation for the material in this Example) and $\Delta H_P$ is the enthalpy of melting (35.757 J/g in this Example), both as determined from the DSC thermogram, and % C is the percent crystallinity of the material.

The foregoing analysis indicates that virtually all of the possible crystallizable material available at a cooling rate of 20°C/min has been crystallized, and that no recrystallization is detectable in this material using DSC. Thus, on heating the above material, there occurs little or no dimensional shrinkage in the polyester product due to recrystallization.

Samples made by the above process were tested as to their impact strength using a Gardner type impact test. The tests were conducted at ambient temperature and humidity. Table 4 shows the results of the impact tests.

TABLE 4

| Sample # | Impact (IN-LBS.) | Sample # | Impact (IN-LBS.) |
|---|---|---|---|
| 1 | 56 | 16 | 64 |
| 2 | 80 | 17 | 56 |
| 3 | 56 | 18 | 80 |
| 4 | 72 | 19 | 80 |
| 5 | 72 | 20 | 72 |
| 6 | 80 | 21 | 72 |
| 7 | 56 | 22 | 72 |
| 8 | 72 | 23 | 88 |
| 9 | 64 | 24 | 80 |
| 10 | 64 | 25 | 88 |
| 11 | 56 | 26 | 104 |
| 12 | 72 | 27 | 88 |
| 13 | 64 | 28 | 80 |
| 14 | 72 | 29 | 72 |
| 15 | 80 | 30 | 88 |

The impact strength of this material had a low of 56 in-lbs, a high of 104 in-lbs, and the average impact strength was 73 in-lbs.

<u>Example 11.</u>

Melt-to-mold preparation of CPET impact modified polyester and DSC analysis.

A 50/50 regrind blend consisting of a 0.95 i.v. polyethylene terephthalate homopolymer (Goodyear Tire and Rubber Co. product no. 9506) was pre-dried at about 330°F (165,6°C) for greater than 6 hours in a desiccant dryer to less than 50 ppm water. Approximately 2.5 % by weight of a shell-core impact modifier (Rohm and Haas product no. 5375) was also pre-dried at about 210°F (98,9°C) for about 2.5 hrs in the same manner. To the impact modified polymer mix was added about 1.2 % by weight of a linear low density polyethylene mold release agent (Goodyear Tire and Rubber product no. NA1, having a melt flow index of 0.9) to this mixture was added 9 % by weight of another mixture of consisting of 30 % of a grade 144 polycarbonate sold by General Electric Company and 70 % of a developmental grade ethylene-butyl acrylate copolymer (Chevron Chemical Company no. DS1120-70). This combined mixture was added to the dried polyester in a Welex extruder using a standard polyester mixing screw (Davis Standard Co.). The material was directed through a melt pump to dampen pressure fluctuations, while being kept at a temperature between about 510°F (265,5°C) to about 550°F (287,8°C), and was then extruded in reverse profile with uniform melt temperature as a two dimensional sheet. The polyester sheet was then transferred into a conventional flexible lip-modified coat hanger die (EDT Co.) with the mold temperature set at about 365°F (185°C). The composition resided in the mold for about 40 sec. after which the molded polyester sheet was removed from the mold and allowed to further cool to ambient temperature. The average thickness of the polyester sheet was from about 26 to about 31 mils.

A differential scanning calorimetry (DSC) analysis of the CPET material made as described herein. The analysis was performed on a Perkin Elmer 7 Series Thermal Analysis System, as per the manufacturer's recommendations. The sample was analyzed with a heating rate of 20°C per minute. No exothermic recrystallization reaction is seen in the region between 90°C and the of melting of the material (about 251°C). The degree of crystallinity as calculated by the endothermic reaction of the material is determined from the calorimetric analysis to be about 31 % using the equation :

$$\% \; C = (\Delta H_T \; x \; 3.434) - 0.2804$$

where $\Delta H_T = \Delta H_r + \Delta H_P$ in calories per gram, and where $\Delta H_r$ is the enthalpy of recrystallization (taken as 0 in the calculation for the material in this Example) and $\Delta H_P$ is the enthalpy of melting (35.757 J/g in this Example), both as determined from the DSC thermogram, and % C is the percent crystallinity of the material.

The foregoing analysis indicates that virtually all of the possible crystallizable material available at a cooling rate of 20°C/min has been crystallized, and that no recrystallization is detectable in this material using DSC. Thus, on heating the above material, there occurs little or no dimensional shrinkage in the polyester product due to recrystallization.

Samples made by the above process were tested as to their impact strength using a Gardner type impact test. The tests were conducted at ambient temperature and humidity. Table 5 shows the results of the impact tests.

TABLE 5

| Sample # | Impact (IN-LBS.) | Sample # | Impact (IN-LBS.) |
|----------|------------------|----------|------------------|
| 1 | 56 | 14 | 48 |
| 2 | 64 | 15 | 56 |
| 3 | 64 | 16 | 56 |
| 4 | 56 | 17 | 56 |
| 5 | 56 | 18 | 56 |
| 6 | 64 | 19 | 56 |
| 7 | 48 | 20 | 56 |
| 8 | 64 | 21 | 48 |
| 9 | 48 | 22 | 48 |
| 10 | 48 | 23 | 56 |
| 11 | 64 | 24 | 56 |
| 12 | 56 | 25 | 56 |
| 13 | 56 | | |

The impact strength of this material had a low of 48 in-lbs, a high of 64 in-lbs, and the average impact strength was 53 in-lbs.

Example 12.

Melt-to-mold preparation of CPET impact modified polyester and DSC analysis.

A blend consisting of a 0.95 i.v. polyethylene terephthalate homopolymer (Goodyear Tire and Rubber Co. product no. 9506, sold under the tradename Cleartuf®) was pre-dried at about 330°F (165,6°C) for greater than 6 hours in a desiccant dryer to less than 50 ppm water. To this was added 10 % by weight of another mixture of consisting of 30 % of a grade 144 polycarbonate sold by General Electric Company and 70 % of a developmental grade ethylene-butyl acrylate copolymer (Chevron Chemical Company no. DS1120-70). This combined mixture was added to the dried polyester in a Welex extruder using a standard polyester mixing screw (Davis Standard Co.). The material was directed through a melt pump to dampen pressure fluctuations, while being kept at a temperature between about 510°F (265,5°C) to about 550°F (287,8°C), and was then extruded in reverse profile with uniform melt temperature as a two dimensional sheet. The polyester sheet was then transferred into a conventional flexible lip-modified coat hanger die (EDT Co.) with the mold temperature set at about 365°F (185°C). The composition resided in the mold for about 40 sec. after which the molded polyester sheet was removed from the mold and allowed to further cool to ambient temperature. The average thickness of the polyester sheet was from about 12 to about 19 mils.

A differential scanning calorimetry (DSC) analysis of the CPET material made as described herein. The analysis was performed on a Perkin Elmer 7 Series Thermal Analysis System, as per the manufacturer's recommendations. The sample was analyzed with a heating rate of 20°C per minute. No exothermic recrystallization reaction is seen in the region between 90°C and the of melting of the material (about 251°C). The degree of crystallinity as calculated by the endothermic reaction of the material is determined from the calorimetric analysis to be from about 27 % to about 30 % using the equation :

$$\% \, C = (\Delta H_T \times 3.434) - 0.2804$$

where $\Delta H_T = \Delta H_r + \Delta H_P$ in calories per gram, and where $\Delta H_r$ is the enthalpy of recrystallization (taken as 0 in the calculation for the material in this Example) and $\Delta H_P$ is the enthalpy of melting (35.757 J/g in this Example), both as determined from the DSC thermogram, and % C is the percent crystallinity of the material.

The foregoing analysis indicates that virtually all of the possible crystallizable material available at a cooling rate of 20°C/min has been crystallized, and that no recrystallization is detectable in this material using DSC. Thus, on heating the above material, there occurs little or no dimensional shrinkage in the polyester product due to recrystallization.

Samples made by the above process were tested as to their impact strength using a Gardner type impact test. The tests were conducted at ambient temperature and humidity. Table 6 shows the results of the impact tests.

TABLE 6

| Sample # | Impact (IN-LBS.) | Sample # | Impact (IN-LBS.) |
|---|---|---|---|
| 1 | 72 | 14 | 56 |
| 2 | 88 | 15 | 72 |
| 3 | 64 | 16 | 72 |
| 4 | 56 | 17 | 88 |
| 5 | 64 | 18 | 80 |
| 6 | 104 | 19 | 88 |
| 7 | 104 | 20 | 56 |
| 8 | 80 | 21 | 72 |
| 9 | 88 | 22 | 80 |
| 10 | 72 | 23 | 88 |
| 11 | 80 | 24 | 64 |
| 12 | 80 | 25 | 64 |
| 13 | 56 | 26 | 72 |

The impact strength of this material had a low of 56 in-lbs, a high of 104 in-lbs, and the average impact strength was 75 in-lbs.

Example 13.

The following twelve polyethylene terephthalate compositions were formulated, with the numbers given being the weight percent of each component, respectfully :

| SAMPLE | 0.95 i.v. PET | SHELL-CORE MODIFIER | A | B | OTHER |
|---|---|---|---|---|---|
| CTRL | 97 | - | - | - | 3 MRA |
| T2 | 87.7 | 9 | - | - | 3.3 Ebony 125 |
| T3a | 95 | - | 5 | - | |
| T3b | 95 | - | - | 5 | |
| T3c | 90 | - | 10 | - | |
| T3d | 90 | - | - | 10 | |
| T4a | 90 | 5 | 5 | - | |
| T4b | 90 | 5 | - | 5 | |
| T4c | 92.5 | 2.5 | 5 | - | |
| T4d | 92.5 | 2.5 | - | 5 | |
| T4e | 85 | 5 | 10 | - | |
| T4f | 85 | 5 | - | 10 | |

A = polyethylene-methylacrylate impact modifier having approximately 20 % acrylate co-monomer by weight, and melt flow of about 0.5 g/10 min. as measured by the ASTM D1238 method.

B = same as A except a melt flow of about 2 g/10 min. as measured by the ASTM D1238 method.

MRA = linear low density mold release agent.

Each resin was prepared essentially as in Example 3 and formed into a sheet having a thickness of about 20 mils and a crystallinity of about 29 %. The treatment of each resin was equivalent, such that the variations in manufacture of each sheet minimized between the samples and the values obtained thereby normalized.

The impact strength of each sample was then tested at about 23°C, 0°C, -20°C and -40°C on a Dynatup® Autoloader instrumented impact tester (Pittsburg, PA), following ASTM 3763-86. The results of these tests are represented graphically in Figures 12 to 15.

Figure 12 depicts the energy to maximum load (ft-lbs) of each of the samples at room temperature (black), -20°C (dotted) and -40°C (cross-hatched).

Figure 13 graphically depicts the total energy (ft-lbs) at maximum load at ambient temperature (black), -20°C (dotted) and -40°C (cross-hatched).

Figure 14 graphically depicts the results the total energy (ft-lbs) at maximum load (black), minimum load (cross-hatched) and the average (dotted) of the control and samples T2 and T3c at room temperature (Figure 14a) and at -20°C (Figure 14c).

Figure 15 graphically depicts the maximum (black), minimum (cross-hatched) and average (dotted) measured energy to maximum load (ft-lbs) for the control, T2 and T3c samples at ambient temperature (Figure 15a) and at -20°C (Figure 15b).

As is evidenced in Figures 12 to 15, inclusion of either the shell-core modifier and/or the polyalkylene-acrylate copolymer in the polyethylene terephthalate significantly increases the impact resistance of the resin, particularly at temperatures below ambient. Additionally, it can be seen that the polyalkylene-acrylate copolymer alone significantly enhances the impact strenght of the resin over that without the inclusion of this additive.

Example 14.

In an illustrative example of the invention, the process essentially as described is performed using only virgin 0.80 i.v. polyethylene terephthalate, without any additional additives. The product has an undetectable or negligible enthalpy of recrystallization at a heating rate of 25°C/min in DSC analysis.

Example 15.

In another illustrative example of the invention, sheets, rolls, or pellets, etc. of under crystallized polyester are obtained from a resin supplier and heated to form a molten, substantially amorphous resin. This resin is then processed, with or without inclusion of additives, with the controlled cooling and time of dynamic crystallization essentially as exemplified in the Examples above. The material has improved gas barrier and dimensional stability characteristics as compared to the polyester used as base material.

Example 16.

In another illustrative process of the invention, a polyester resin is formed, mixed with additives if desired, and rapidly cooled to a temperature below the lower boundary crystallization temperature, for example to about the Tg of the material, to result in thermal quenching of the crystallization reaction. This material is then reheated to produce a melt of substantially amorphous polyester and processed with controlled cooling and time of dynamic crystallization as exemplified above, to produce a polyester with improved gas permeability and dimensional stability.

Comparative Example 1.

A commercial PET product made by the glass-to-mold process was obtained and analyzed by DSC to determine the amount of recrystallization upon heating.

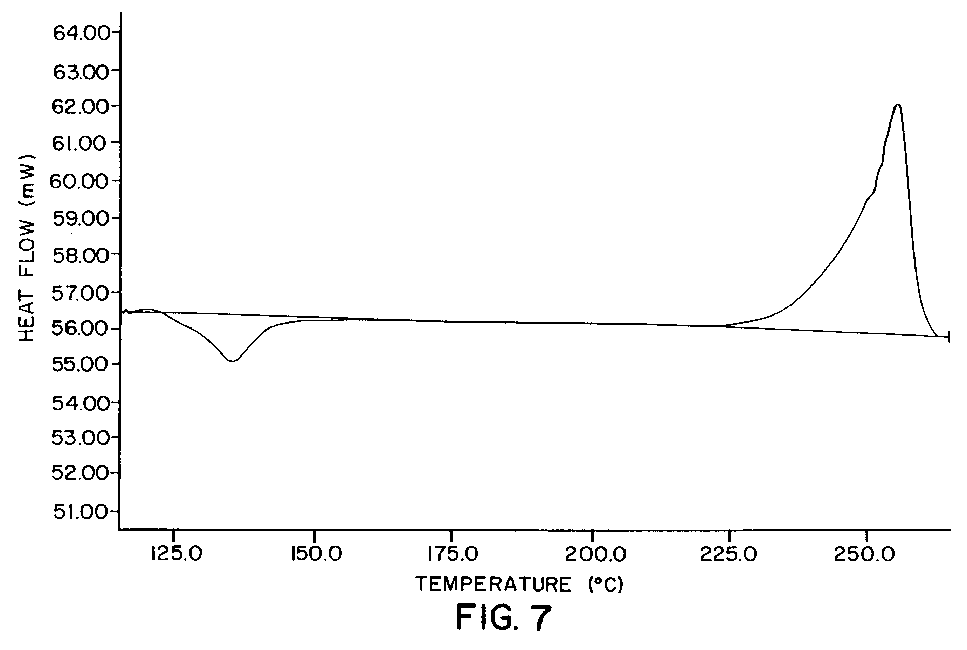

6.0 mg of the product of this Example was analyzed by DSC by heating the material from about 50°C to about 300°C, at a rate of 20°C/min. The resulting thermogram is depicted in Figure 7. As can be ssen from the Figure, significant recrystallization was detected, as is evidenced by the exotherm between about 120°C and about 170°C. As in the previous Comparative Examples, this material would also exhibit excess shrinkage (low dimensional stability) at elevated temperatures due to the recrystallization process.

Comparative Example 2.

Another commercial product consisting of polyethylene terephthalate made by the glass-to-mold, two-step manufacturing process was analyzed by DSC to determine the amount of recrystallization the product undergoes with heating.

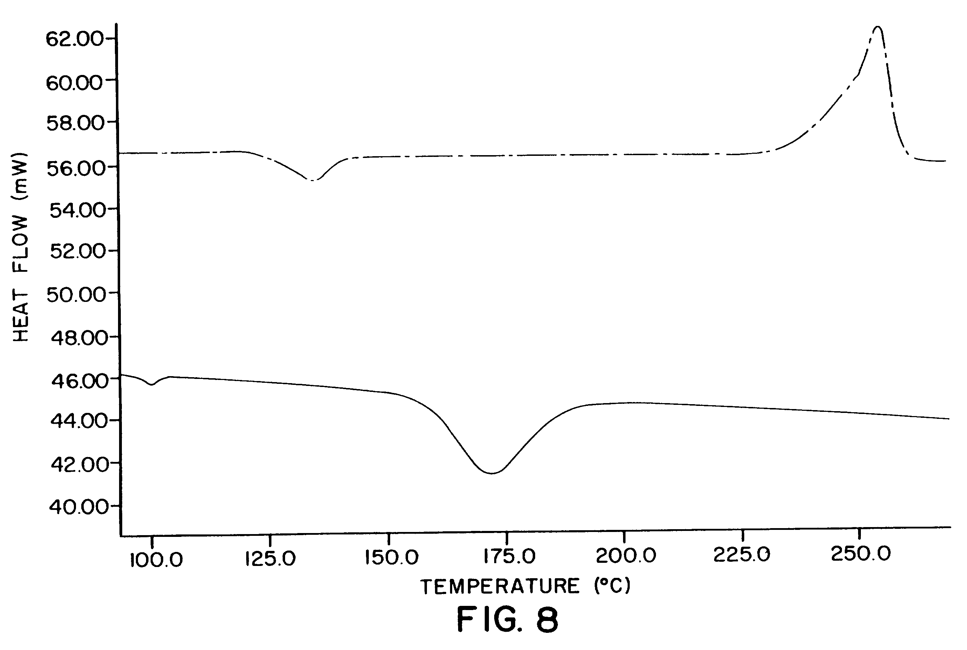

Figure 8 depicts a thermogram resulting from DSC analysis of 6.0 mg of the material in this example. The upper curve represents the thermogram resulting from heating the sample from about 50°C to about 300°C at a rate of 25°C/min. As can be seen from the recrystallization exotherm between about 120°C and about 140°C, this material undergoes substantial recrystallization, an thus is expected to have significant shrinkage due to recrystallization at these elevated temperatures.

Comparative Example 3.

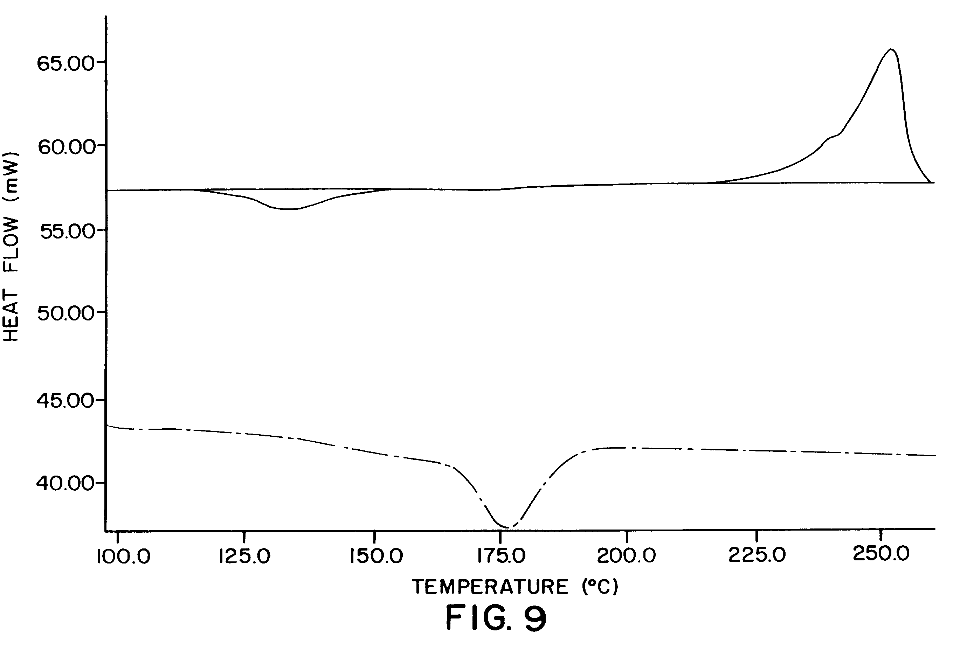

Another commercial polyethylene terephthalate product was purchased and tested by DSC for propensity to recrystallize at elevated temperature. The thermograms resulting from the DSC analysis are depicted in Figure 9.

The upper curve represents the thermogram obtained upon heating 9.8 mg of the cup material from about 50°C to about 300°C at a rate of 20°C/min. A recrystallization exotherm is detected between about 115°C and about 160°C. As calculated from the heating thermogram, the crystalline content of this material was increased more than 4 % during the heating process.

Comparative Example 4.

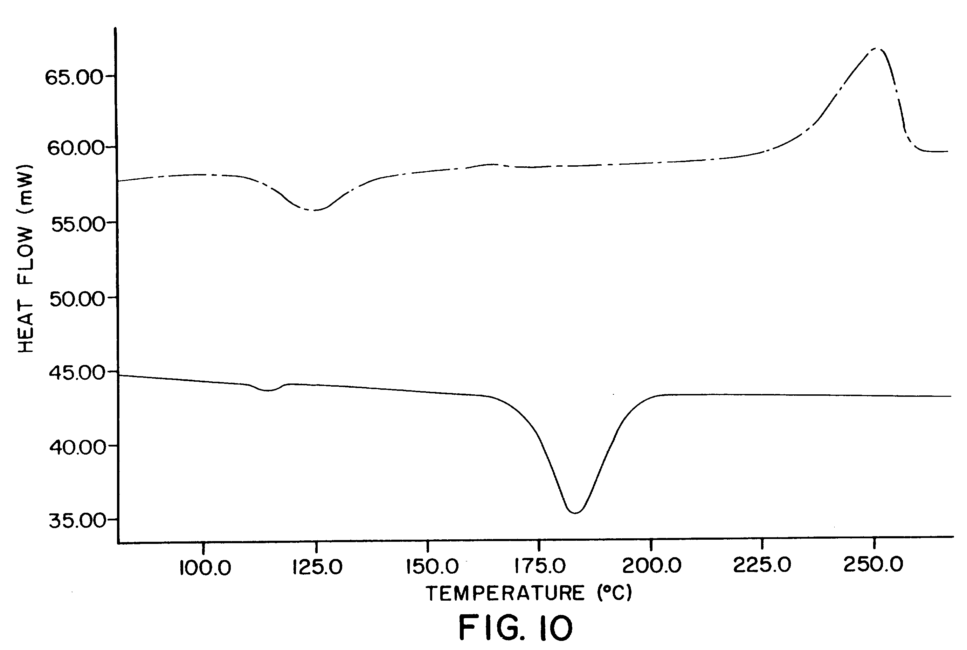

10.2 mg of another commercially available polyethylene terephthalate product was analyzed by DSC to determine the propensity of this product to recrystallize upon heating. This product is believed to be made by the two stage process where the polyester was originally manufactured by a process which thermally suppresses crystallization upon cooling. Figure 10 depicts the thermograms resulting from the DSC analysis.

The upper curve in Figure 10 is the thermogram resulting from heating the polyester material from about 50°C to about 340°C at a rate of 20°C/min. An exothermic recrystallization reaction is easily detected between about 110°C and about 140°C, indicating that this product is also dimensionally unstable due to recrystallization upon heating. The total crystallinity of the product was determined to be about 17 % of which about 11 % was due to recrystallization, indicating the crystallinity of the product increased by about 1.8 times that originally in the product at ambient temperature.

The lower curve in Figure 10 represents the DSC thermogram obtained from cooling the material of this Example from about 340°C to about 20°C, at a rate of 20°C/min. A dynamic crystallization reaction was detected in the analysis. As determined from this exothermic reaction, the maximum crystallinity attainable at this rate of cooling is about 32 %, indicating that the original product was only about one-third as crystallized as is possible for this material.

Comparative Example 5.

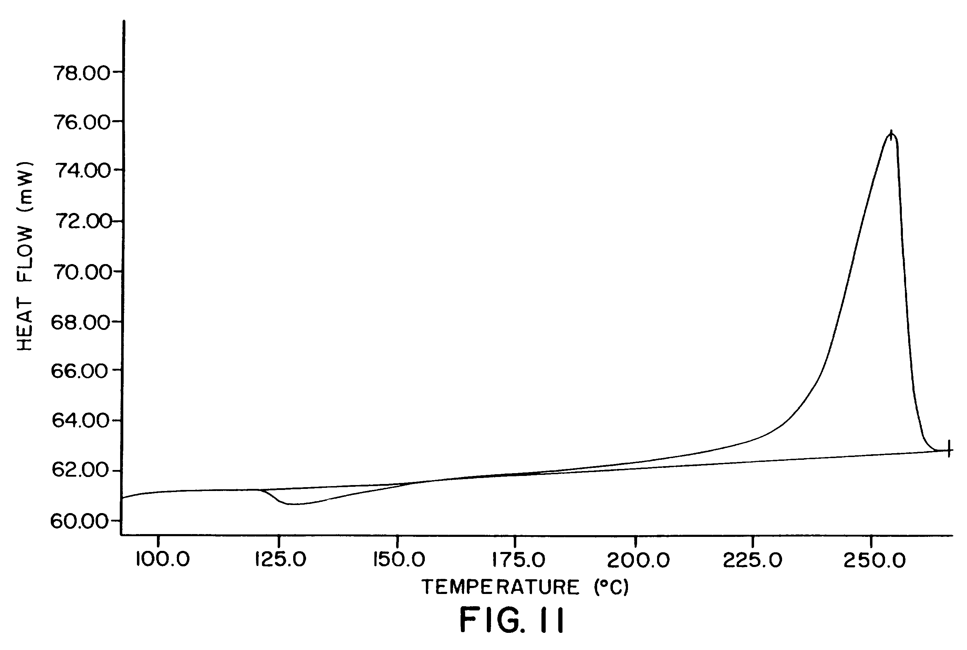

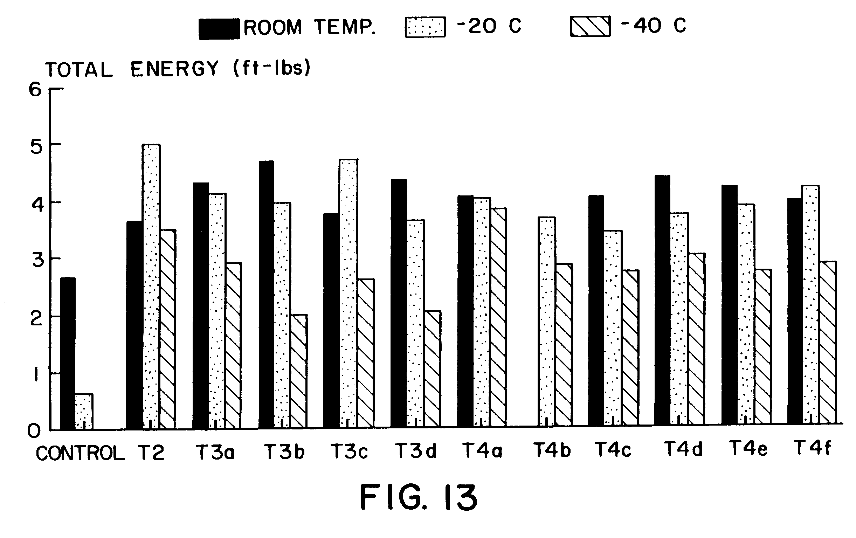

Another commercially available polyester was tested for recrystallization at elevated temperatures by DSC analysis. 16.4 mg of the product was heated from about 40°C to about 340°C at a rate of 20°C/min, with the resulting thermogram depicted in Figure 11. As in each of the other Comparative Examples, a significant amount of recrystallization was observed as is evidence by the exothermic reaction between about 120°C and about 155°C. Based upon the data in Figure 13, the crystallinity of the product material increased by about 1.5 % upon heating.

**Claims**

1. A process for producing a dimensionally stable, impact modified polyester with improved low temperature impact strength and improved gas barrier properties comprising the steps :

   (a) heating a composition comprising a crystallizable polyester and an impact modifier to a temperature above the melting point temperature of the polyester for a time sufficient to bring said polyester to a substantially amorphous (greater than 99 weight %) molten state ;
   (b) maintaining the composition heated in step (a) above said melting temperature until said impact modifier is dissolved in the polyester ;
   (c) controlling cooling of the composition in step (b) at a rate of from 1°C to 80°C per minute so as to avoid thermal quenching until there is crystallization of the polyester and impact modifier forming a mixture of particles of impact modifier embedded in a matrix of the polyester, the impact modifier having a particle size of from 0.1 to 10 microns in diameter ; and
   (d) continuing controlled cooling of the composition by contacting the composition to a surface capable of imparting shape for from 1 second to 5 minutes, said contact surface being at a temperature of at least the lower boundary crystallization temperature from melt of said polyester to provide an impact modified polyester, wherein said impact modified polyester has an oxygen permeability of from 0.2 to 4.9 cc-0.025 mm/650 cm$^2$-24 hr-atm at 23°C and 60 % relative humidity outside/100 % relative humidity inside and a heat of recrystallization of from 0 to -4.0 calories per gram as measured by differential scanning calorimetry at a heating rate of 25°C/minute.

2. The process as set forth in claim 1, wherein in step (a) said impact modifier is selected from the group consisting of polypropylene, isopropylene, polybutadiene, paramethylstyrene, polymethylmethacrylate-polycarbonate shell-core modifier, copolymers of ethylene-methylacrylate, ethylene-butylacrylate, and ethylene-maleic acid, and preferably is a copolymer with a glass transition temperature from about -150°C to about -20°C.

3. The process as set forth in claim 1 or 2, wherein said impact modified polyester has an oxygen permeability of from 0.2 to 3.0 cc-0.025 mm/650 cm$^2$-24 hr-atm at 23°C and 60 % relative humidity outside/100 % relative humidity inside, preferably of from 0.2 to 2.0 cc-0.025 mm/650 cm$^2$-24 hr-atm at 23°C and 60 % relative humidity outside/ 100 % relative humidity inside, preferably of from 0.2 to 1.5 cc-0.025 mm/650 cm$^2$-24 hr-atm at 23°C and 60 % relative humidity outside/100 % relative humidity inside, preferably of from 0.2 to 1.0 cc-0.025 mm/650 cm$^2$-24 hr-atm at 23°C and 60 % relative humidity outside/100 % relative humidity inside.

4. The process as set forth in any one of claims 1 to 3, wherein in step (a) said composition includes a compatibilizer, and/or a nucleant, and/or a filler or a reinforcing agent, and/or a heat stabilizer, and/or a colorant.

5. The process as set forth in claim 4, wherein said compatibilizer is polycarbonate, acetal, aromatic polyketone, acrylonitrile, polyamide-imide, polyarylate, polyetherimide, polyamide, polyphenylene oxide, polyphenylene sulfide, polyimide, polyarylsulfone, polysulfone, polyurethanes, epoxy resins, and/or modified polyester resins, and said filler or reinforcing agent is glass fiber, carbon fiber, ceramic fiber, metal fiber, inorganic minerals and/or particulates.

6. The process as set forth in any one of claims 1 to 5, wherein in step (a) said polyester is polyethylene terephthalate, polyproplene terephthalate, polybutylene terephthalate, polymethylpentene terephthalate, polyethylene naphthalate, polypropylene naphthalate, polybutylene naphthalate, polycycloterephthalic acid or mixtures thereof, and preferably is polyethylene terephthalate homopolymer.

7. The process as set forth in any of claims 1 to 6, wherein in step (a) said heating is to a temperature of from 230°C to 320°C.

8. The process as set forth in any of claims 1 to 7, wherein in step (b) said impact modifier is from 0.1 to 30 % of the total composition by weight.

9. The process as set forth in any of claims 1 to 8, wherein step (a) and step (b) include mixing said composition.

10. The process as set forth in any of claims 1 to 9, wherein in step (c) said particle size is an average particle diameter of from 0.1 to 5 microns, with a standard deviation from the average particle diameter of from 0.1 to 2 microns, preferably is an average particle diameter from 0.1 to 2 microns, with a standard deviation from the average particle diameter of from 0.1 to 1 microns.

11. The process as set forth in claim 1, wherein the heat of recrystallization of the crystalline composition is from 0 to -3.5 cal/g, preferably from 0 to -3.0 cal/g, preferably from 0 to -2,5 cal/g.

12. The process as set forth in claim 1, wherein in step (c) said cooling of the composition is at a rate from 5°C to 80°C per minute, preferably from 20°C to 80°C per minute.

13. A process for producing a dimensionally stable, impact modified polyester with improved low temperature impact strength and improved gas barrier properties as set forth in any one of claims 1 to 12 wherein in step (d) the contact surface temperature is at or above the peak crystallization rate temperature from melt for the polyester.

14. A process for producing a dimensionally stable, impact modified polyester with improved low temperature impact strength and improved gas barrier properties as set forth in any one of claims 1 to 12 wherein in step (d) the contact surface temperature is at the peak crystallization rate temperature from melt for the polyester.

15. A process for producing a dimensionally stable, impact modified polyester with improved low temperature impact strength and improved gas barrier properties as set forth in any one of claims 1 to 14 wherein step (d) contact time is from about 6 seconds to about 2 minutes.

## Patentansprüche

1. Ein Verfahren zur Herstellung eines formstabilen, schlagmodifizierten Polyesters mit verbesserter Niedrigtemperaturschlagfestigkeit und verbesserten Gasbarriereeigenschaften, umfassend die Schritte:

(a) Erwärmen einer Zusammensetzung, umfassend einen kristallisierbaren Polyester und ein Schlagmodifikationsmittel, auf eine Temperatur über der Schrnelzpunkttemperatur des Polyesters für eine Zeit, die ausreicht, um den Polyester in einen im wesentlichen amorphen (größer als 99 Gewichts-%) geschmolzenen Zustand zu überführen;
(b) Halten der in Schritt (a) erwärmten Zusammensetzung über der Schmelztemperatur bis das Schlagmodifikationsmittel in dem Polyester gelöst ist;
(c) Kontrollieren des Abkühlens der Zusammensetzung in Schritt (b) bei einer Rate von 1°C bis 80°C pro Minute, um Thermoquenchen zu vermeiden, bis Kristallisation des Polyesters und des Schlagmodifikationsmittels stattfindet, wodurch ein Gemisch von Partikeln von Schlagmodifikationsmittel, eingebettet in einer Matrix von Polyester, gebildet wird, wobei das Schlagmodifikationsmittel eine Partikelgröße von 0,1 bis 10 Micron im Durchmesser aufweist; und
(d) Fortsetzen des kontrollierten Abkühlens der Zusammensetzung durch Inkontaktbringen der Zusammensetzung mit einer Oberfläche, die in der Lage ist, für eine Sekunde bis 5 Minuten Form zu vermitteln, wobei die Kontaktoberfläche eine Temperatur aufweist, die mindestens der unteren Grenzkristallisationstemperatur von Schmelze des Polyesters entspricht, um einen schlagmodifizierten Polyester zu liefern, worin der schlagmodifizierte Polyester eine Sauerstoffpermeabilität von 0,2 bis 4,9 cc-0,025 mm/650 cm$^2$-24 hr-atm bei 23° C und 60 % relative Luftfeuchte außen/100 % relative Luftfeuchte innen und eine Rekristallisationswärme von 0 bis -4,0 Kalorien pro Gramm, gemessen durch Differentialscanningkalorimetrie bei einer Erwärmungsrate von 25°C/Minute, aufweist.

2. Das Verfahren gemäß Anspruch 1, worin in Schritt (a) das Schlagmodifikationsmittel ausgewählt ist aus der Gruppe bestehend aus Polypropylen, Isopropylen, Polybutadien, Paramethylstyrol, Polymethylmethacrylat-Polycarbonat-Maskenkernmodifikationsmittel; Copolymere von Ethylen-Methacrylat, Ethylen-Butylacrylat und Ethylen-Maleinsäure und vorzugsweise ein Copolymer mit einer Glasübergangstemperatur von ungefähr -150° C bis ungefähr -20° C ist.

3. Das Verfahren gemäß Anspruch 1 oder 2, worin der schlagmodifizierte Polyester eine Sauerstoffpermeabilität von 0,2 bis 3,0 cc-0,025 mm/650 cm$^2$-24 hr-atm bei 23°C und 60 % relative Luftfeuchte außen/100 % relative Luftfeuchte innen, vorzugsweise von 0,2 bis 2,0 cc-0,025 mm/650 cm$^2$-24 hr-atm bei 23°C und 60 % relative Luftfeuchte außen/100 % relative Luftfeuchte innen, vorzugsweise von 0,2 bis 1,5 cc-0,025 mm/650 cm$^2$-24 hr-atm bei 23°C und 60 % relative Luftfeuchte außen/100 % relative Luftfeuchte innen, vorzugsweise von 0,2 bis 1,0 cc-0,025 mm/650 cm$^2$-24 hr-atm bei 23°C und 60 % relative Luftfeuchte außen/100 % relative Luftfeuchte innen hat.

4. Das Verfahren gemäß einem der Ansprüche 1 bis 3, worin in Schritt (a) die Zusammensetzung ein Kompatibilitätsmittel, und/oder einen Keimbildner, und/oder ein Füllmittel oder ein Verstärkungsmittel, und/oder einen Hitzestabilisator, und/oder ein Färbemittel einschließt.

5. Das Verfahren gemäß Anspruch 4, worin das Kompatibilitätsmittel Polycarbonat, Acetal, aromatisches Polyketon, Acrylonitril, Polyamid-Imid, Polyacrylat, Polyetherimid, Polyamid, Polyphenylenoxid, Polyphenylensulfid, Polyimid, Polyarylsulfon, Polysulfon, Polyurethane, Epoxyharze, und/oder modifizierte Polyesterharze ist und das Füllmittel oder Verstärkungsmittel Glasfaser, Kohlenstofffaser, Keramikfaser, Metallfaser, anorganische Mineralien und/oder Partikel ist.

6. Das Verfahren gemäß einem der Ansprüche 1 bis 5, worin in Schritt (a) der Polyester Polyethylenterephthalat, Polypropylenterephthalat, Polybutylenterephthalat, Polymethylpententerephthalat, Polyethylennaphthalat, Polypropylennaphthalat, Polybutylennaphthalat, Polycycloterephthalsäure oder Gemische davon ist und vorzugsweise Polyethylenterephthalathomopolymer ist.

7. Das Verfahren gemäß einem der Ansprüche 1 bis 6, worin in Schritt (a) das Erwärmen auf eine Temperatur von 230°C bis 320°C erfolgt.

8. Das Verfahren gemäß einem der Ansprüche 1 bis 7, worin in Schritt (b) das Schlagmodifikationsmittel von 0,1 bis 30 % der Gesamtzusammensetzung, bezogen auf das Gewicht, ausmacht.

9. Das Verfahren gemäß einem der Ansprüche 1 bis 8, worin Schritt (a) und Schritt (b) das Mischen der Zusammensetzung einschließen.

10. Das Verfahren gemäß einem der Ansprüche 1 bis 9, worin in Schritt (c) die Partikelgröße einen durchschnittlichen Partikeldurchmesser von 0,1 bis 5 Micron, mit einer Standardabweichung von dem durchschnittlichen Partikeldurchmesser von 0,1 bis 2 Micron aufweist, wobei ein durchschnittlicher Teilchendurchmesser von 0,1 bis 2 Micron, mit einer Standardabweichung von dem durchschnittlichen Partikeldurchmesser von 0,1 bis 1 Micron, bevorzugt ist.

11. Das Verfahren gemäß Anspruch 1, worin die Rekristallisationswärme der kristallinen Zusammensetzung von 0 bis -3,5 cal/g, vorzugsweise von 0 bis -3,0 cal/g, vorzugsweise von 0 bis -2,5 cal/g beträgt.

12. Das Verfahren gemäß Anspruch 1, worin in Schritt (c) das Abkühlen der Zusammensetzung mit einer Rate von 5°C bis 80°C pro Minute, vorzugsweise von 20°C bis 80°C pro Minute stattfindet.

13. Ein Verfahren zur Herstellung eines formstabilen, schlagmodifizierten Polyesters mit verbesserter Niedrigtemperaturschlagfestigkeit und verbesserten Gasbarriereeigenschaften gemäß einem der Ansprüche 1 bis 12, worin in Schritt (d) die Kontaktoberflächentemperatur bei oder über der maximalen Kristallisationsratetemperatur von Schmelze für den Polyester liegt.

14. Ein Verfahren zur Herstellung eines formstabilen, schlagmodifizierten Polyesters mit verbesserter Niedrigtemperaturschlagfestigkeit und verbesserten Gasbarriereeigenschaften gemäß einem der Ansprüche 1 bis 12, worin in Schritt (d) die Kontaktoberflächentemperatur bei der maximalen Kristallisationsratetemperatur von Schmelze für den Polyester liegt.

15. Ein Verfahren zur Herstellung eines formstabilen, schlagmodifizierten Polyesters mit verbesserter Niedrigtemperaturschlagfestigkeit und verbesserten Gasbarriereeigenschaften gemäß einem der Ansprüche 1 bis 14, worin die Schritt (d)-Kontaktzeit von ungefähr 6 Sekunden bis ungefähr 2 Minuten beträgt.

## Revendications

1. Procédé pour la production d'un polyester à dimension stable et à résistance modifiée avec une résistance aux chocs améliorée à basse température et des propriétés améliorées d'imperméabilité au gaz comprenant les étapes :

(a) le chauffage d'une composition comprenant un polyester cristallisable et un modificateur d'impact (« impact modifier ») à une température au dessus de la température du point de fusion du polyester pendant un temps suffisamment long ceci afin d'amener ledit polyester à un stade fondu sensiblement amorphe (supérieur à 99 % en poids) ;
(b) le maintien de la composition chauffée dans l'étape (a) au-dessus de ladite température de fusion jusqu'à ce que ledit modificateur d'impact soit dissout dans le polyester;
(c) le contrôle du refroidissement de la composition de l'étape (b) à une vitesse de 1°C à 80°C par minute de telle sorte à éviter une dégradation thermique (« thermal quenching ») jusqu'à ce qu'il y ait cristallisation du polyester et du modificateur d'impact pour former un mélange de particule du modificateur d'impact intégré dans une matrice du polyester, le modificateur d'impact présentant une taille de particules de 0,1 à 10 microns en diamètre ; et
(d) la poursuite du refroidissement contrôlé de la composition par la mise en contact de la composition avec une surface capable de transmettre une forme en l'espace d'une seconde à 5 minutes, ladite surface de contact étant à une température qui est au moins à la température limite inférieure de cristallisation dudit polyester fondu (« of at least the lower boundary crystallization temperature from melt of said polyester ») ceci afin de procurer un polyester modifié relativement à l'impact, où ledit polyester modifié à l'impact présente une perméabilité à l'oxygène de 0,2 à 4,9 cc-0,025 mm/650 cm$^2$-24 hrs-atm à 23°C et 60 % d'humidité relative à l'extérieur /100 % d'humidité relative à l'intérieur ; et une énergie de recristallisation de 0 à -4,0 calories par gramme telle que mesurée par scannage calorimétrique différentiel (« differential scanning calorimetry ») à une vitesse de chauffage de 25°C/min.

2. Procédé selon la revendication 1 dans lequel dans l'étape (a) ledit modificateur d'impact est sélectionné à partir du groupe consistant en le polypropylène, l'isopropylène, le polybutadiène, le paraméthylstyrène, le modificateur enveloppe-noyau polyméthylméthacrylate-polycarbonate, des copolymères de méthylacrylate d'éthylène, de butylacrylate d'éthylène et d'acide éthylène maléique, et est de préférence un copolymère avec une température de transition vitreuse d' environ -150°C à environ -20°C.

3. Procédé selon la revendication 1 ou 2, dans lequel ledit polyester modifié relativement à l'impact présente une perméabilité à l'oxygène de 0,2 à 3 cc-0,025 mm/650 cm$^2$-24 hrs-atm à 23°C et à 60 % d'humidité relative à l'extérieur et 100 % d'humidité relative à l'intérieur, de préférence de 0,2 à 2 cc-0,025 mm/650 cm$^2$-24 hrs-atm à 23°C et à une humidité relative de 60 % à l'extérieur et 100 % d'humidité relative à l'intérieur, de préférence de 0,2 à 1,5 cc-0,025 mm/650 cm$^2$-24 hrs-atm à 23°C et à une humidité relative de 60 % à l'extérieur et 100 % d'humidité relative à l'intérieur, de préférence de 0,2 à 1 cc-0,025 mm/650 cm$^2$-24 hrs-atm à 23°C et à une humidité relative de 60 % à l'extérieur et 100 % d'humidité relative à l'intérieur.

4. Procédé selon l'une quelconque des revendications 1 à 3, dans lequel dans l'étape (a) ladite composition comprend un comptabilisant, ou un inducteur de noyau (« nucleant ») et/ou un agent de remplissage ou de renfort, et/ou un stabilisant de chaleur, et/ou un colorant.

5. Procédé selon la revendication 4, dans lequel ledit comptabilisant est un polycarbonate, un acétal, une polycétone aromatique, un acrylonitrile, un polyamide-imide, un polyarylate, un polyéthérimide, un polyamide, un polyphénylène oxyde, un sulfure de polyphénylène, un polyimide, une polyarylsulfone, une polysulfone, des polyuréthanes, des résines époxy et/ou des résines de polyester modifiées, et ledit agent de remplissage ou agent de renfort est la fibre de verre, la fibre de carbone, la fibre de céramique, la fibre de métal, des minéraux inorganiques et/ou des matières particulaires.

6. Procédé selon l'une quelconque des revendications 1 à 5, dans lequel dans l'étape (a) ledit polyester est un téréphthalate de polyéthylène, un téréphthalate de polypropylène (« polyproplene terephthalate »), un téréphthalate de polybutylène, un téréphthalate de polyméthylpentène, un naphthalate de polyéthylène, un naphthalate de polypropylène, un naphthalate de polybutylène, un acide polycyclotéréphthalique ou un mélange de ceux-ci, et de préférence est un homopolymère de téréphthalate de polyéthylène.

7. Procédé selon l'une quelconque des revendications 1 à 6 dans lequel dans l'étape (a) ledit chauffage est à une température de 230°C à 320°C.

8. Procédé selon l'une quelconque des revendications 1 à 7 dans lequel dans l'étape (b) ledit modificateur d'impact est présent dans une proportion de 0,1 à 30 % du poids total de la composition.

9. Procédé selon l'une quelconque des revendications 1 à 8 dans lequel l'étape (a) et l'étape (b) comprend le mélange de ladite composition.

10. Procédé selon l'une quelconque des revendications 1 à 9, dans lequel dans l'étape (c) ladite taille des particules se situe à un diamètre moyen de particules de 0,1 à 5 microns, avec une déviation standard du diamètre moyen de particules de 0,1 à 0,2 microns de préférence celle-ci à un diamètre particulaire moyen de 0,1 à 2 microns, avec une déviation standard à partir du diamètre particulaire moyen de 0,1 à 1 microns.

11. Procédé selon la revendication 1 dans lequel la chaleur de recristallisation de la composition cristalline va de 0 à -3,5 cal/ g, de préférence de 0 à -3 cal/g, de préférence de 0 à -2,5 cal/g.

12. Procédé selon la revendication 1 dans lequel dans l'étape (c) ledit refroidissement de la composition a lieu à une vitesse de 5°C à 80°C par minute, de préférence de 20°C à 80°C par minute.

13. Procédé pour la production d'un polyester à dimension stable, modifié relativement à la résistance au choc (« impact mmodified polyester »), avec une résistance aux chocs améliorée à basse température et des propriétés d'imperméabilité au gaz améliorées selon l'une quelconque des revendications 1 à 12 dans lequel dans l'étape (d) la température de la surface de contact se situe ou est au dessus de la température de vitesse maximum de cristallisation pour le polyester fondu. (« above the peak cristallization rate from melt for the polyester »)

14. Procédé pour la production d'un polyester à dimension stable, modifié relativement à la résistance au choc, avec une résistance à l'impact améliorée à basse température et des propriétés d'imperméabilité au gaz améliorées selon l'une quelconque des revendications 1 à 12 dans lequel dans l'étape (d) la température de la surface de contact se situe à la température de vitesse de cristallisation maximum pour le polyester fondu.

15. Procédé pour la production d'un polyester à dimension stable, modifié relativement à la résistance au choc, avec une résistance à l'impact améliorée à basse température et des propriétés d'imperméabilité au gaz améliorées selon l'une quelconque des revendications 1 à 14 dans lequel dans l'étape (d) le temps de contact est d'environ 6 secondes à environ 2 minutes.

FIG. I

EP 0 625 172 B1

FIG. 2

FIG. 3

FIG. 4

FIG. 5

EP 0 625 172 B1

FIG. 6

EP 0 625 172 B1

FIG. 7

EP 0 625 172 B1

EP 0 625 172 B1

FIG. 8

FIG. 9

EP 0 625 172 B1

FIG. 10

EP 0 625 172 B1

FIG. II

FIG. 12

FIG. 13

EP 0 625 172 B1

ENERGY TO MAX. LOAD (ft.-lbs)

FIG. 14A

ENERGY TO MAX. LOAD (ft.-lbs)

FIG. 14B

EP 0 625 172 B1

FIG. 15A

FIG. 15B

EP 0 625 172 B1